# EUROPÄISCHE PATENTSCHRIFT

(11) **EP 3 768 916 B1**
(45) Veröffentlichungstag und Bekanntmachung des Hinweises auf die Patenterteilung: **19.11.2025**
(21) Anmeldenummer: 19714129.4
(22) Anmeldetag: 18.03.2019
(51) Int. Cl.: E04G 1/36

(54) **VORRICHTUNG ZUR HALTERUNG WENIGSTENS EINES IN EINEM SCHACHTARTIGEN BAUWERK ZU HALTERNDEN GEGENSTANDS**
DEVICE FOR HOLDING MATTER IN A MANHOLE SHAFT
DISPOSITIF DE MAINTIEN UN OBJET DANS UN TROU D'HOMME

(30) Priorität: 22.03.2018 DE 102018106883
(43) Veröffentlichungstag der Anmeldung: 27.01.2021
(73) Patentinhaber: Seidelberger, Manfred, 90455 Nürnberg (DE)
(72) Erfinder: Seidelberger, Manfred, 90455 Nürnberg (DE)
(74) Vertreter: Hafner & Kohl PartmbB
(86) Internationale Anmeldenummer: PCT/EP2019/056715
(87) Internationale Veröffentlichungsnummer: WO 2019/179948

(56) Entgegenhaltungen:
- US-A- 1 380 074
- US-A- 3 497 899

## Beschreibung

Die Erfindung betrifft eine Vorrichtung zur Halterung wenigstens eines in einem schachtartigen Bauwerk zu halternden Gegenstands.

Entsprechende Vorrichtungen zur Halterung wenigstens eines in einem schachtartigen Bauwerk zu halternden Gegenstands sind dem Grunde nach bekannt. Die Funktion entsprechender Vorrichtungen besteht darin, in einem schachtartigen Bauwerk, d. h. z. B. einem einen Teil einer Kanalisation bildenden Kanalschacht, zu halternde Gegenstände stabil in dem jeweiligen schachtartigen Bauwerk zu haltern. Entsprechende Vorrichtungen finden z. B. in dem Bereich der Kanaltechnik, insbesondere der Abwasserkanaltechnik, Verwendung, da dort oftmals Gegenstände in schachtartigen Bauwerken zu haltern sind.

Bis dato sind entsprechende Vorrichtungen in funktioneller bzw. konstruktiver Hinsicht regelmäßig derart konzipiert, dass die mit den Vorrichtungen mögliche Halterung eines Gegenstands in einem schachtartigen Bauwerk mit einem teils erheblichen Arbeits- und Personalaufwand verbunden ist. Konkret erfordert die Halterung von in einem schachtartigen Bauwerk zu halternden Gegenständen vermittels gängigen Vorrichtungen bis dato regelmäßig eine manuelle Befestigung jeweiliger Gegenstände in einem schachtartigen Bauwerk, wozu mindestens eine Person in das schachtartige Bauwerk einsteigen, dort die Befestigung des jeweiligen Gegenstands, z. B. durch ein ein Anbohren des schachtartigen Bauwerks erforderndes Anschrauben dieses an das schachtartige Bauwerk, vornehmen und wieder aus dem schachtartigen Bauwerk aussteigen muss. Typischerweise ist eine zweite Person außerhalb des schachtartigen Bauwerks erforderlich, welche die in dem schachtartigen Bauwerk befindliche Person bei der Befestigung des Gegenstands an dem schachtartigen Bauwerk unterstützt und/oder überwacht.

Bekannte Vorrichtungen sind demnach im Hinblick auf die Ermöglichung einer technisch wie auch wirtschaftlich effizienten sowie insbesondere beschädigungs- bzw. zerstörungsfreien Halterung von in einem schachtartigen Bauwerk zu halternden Gegenständen verbesserungswürdig.

US 1 380 074 A offenbart eine Arbeitsplattform für ein Silo.

US 3 497 899 A offenbart eine Schachtstütze für ein Führungsrohr einer Abwasserleitung.

Der Erfindung liegt die Aufgabe zugrunde, eine Vorrichtung zur Halterung wenigstens eines in einem schachtartigen Bauwerk zu halternden Gegenstands anzugeben, welche eine effiziente Halterung von in dem jeweiligen schachtartigen Bauwerk zu halternden Gegenstands ermöglicht.

Die Aufgabe wird durch die Gegenstände der unabhängigen Ansprüche gelöst. Die hierzu abhängigen Ansprüche betreffen mögliche Ausführungsformen der Vorrichtung gemäß dem vorliegenden unabhängigen Anspruch 1.

Die Erfindung ist durch die Gegenstände der beigefügten Ansprüche definiert, welche unter Heranziehung der Beschreibung und der Zeichnungen auszulegen sind. Die hierin beschriebene Vorrichtung dient zur Halterung wenigstens eines in einem schachtartigen Bauwerk zu halternden Gegenstands. Vermittels der Vorrichtung lassen sich demnach ein oder mehrere Gegenstände in einem schachtartigen Bauwerk haltern. Eine vermittels der Vorrichtung realisierte Halterung geht typischerweise mit einer, insbesondere gegenüber von außen wirkenden Kräften, wie z. B. dem Druck von in dem schachtartigen Bauwerk strömenden bzw. aufsteigenden Wasser, stabilen, d. h. insbesondere lage- bzw. positionsfesten, Befestigung bzw. Montage eines jeweiligen Gegenstands an bzw. in dem schachtartigen Bauwerk einher. Die Vorrichtung dient sonach gleichermaßen zur Befestigung bzw. Montage wenigstens eines an bzw. in einem schachtartigen Bauwerk zu befestigenden bzw. zu montierenden Gegenstands.

Bei einem im Weiteren kurz als "Bauwerk" bezeichneten schachtartigen Bauwerk handelt es sich typischerweise um ein zumindest abschnittsweise, insbesondere vollständig, vertikal ausgerichtetes Schachtbauwerk (Schacht). Ein entsprechendes Bauwerk umfasst typischerweise eine Anzahl an Wandungsabschnitten, welche einen Innenraum begrenzen. In Betracht kommen grundsätzlich sämtliche Bauformen, d. h. z. B. Bauformen gleicher oder ungleicher Querschnittsgeometrie, (querschnittlich) runde oder eckige Bauformen, mit Absätzen versehene Bauformen, etc. Bei einem entsprechenden Bauwerk kann es sich z. B. um ein einen Teil eines Kanal-, Energie- oder sonstigen Leitungsnetzes bildenden Inspektions-, Revisions- oder Installationsschacht handeln. Besonderes Beispiel eines Schachtbauwerks ist ein einen Teil einer Abwasser führenden Kanalisation bildender Abwasserkanalschacht.

Ein vermittels der Vorrichtung zu halternder Gegenstand kann mit wenigstens einer technischen Funktionalität versehen sein. Ein Gegenstand kann demnach als mit wenigstens einer technischen Funktionalität versehene technische Einrichtung ausgebildet sein bzw. wenigstens eine solche umfassen. Die Funktionalität des Gegenstands bestimmt sich typischerweise danach, in welchem Bauwerk der Gegenstand bestimmungsgemäß zu haltern ist; der Gegenstand kann demnach mit einer im Hinblick auf ein bestimmtes Bauwerk bzw. dort vorherrschende Bedingungen gewählten Funktionalität versehen sein. Ein Gegenstand kann demnach z. B. der Schädlingsbekämpfung, der Erfassung von Daten, der Signalverarbeitung oder sonstiger funktionaler Aufgaben dienen.

Konkrete Beispiele für Gegenstände sind entsprechend z. B. ein oder mehrere Erfassungselemente, d. h. z. B. Sensorelemente, umfassende Erfassungseinrichtungen. Entsprechende Erfassungseinrichtungen - hierunter sind z. B. Mess- bzw. Sensoreinrichtungen zu verstehen - können zur Erfassung wenigstens eines chemischen und/oder physikalischen Parameters in dem Bauwerk eingerichtet sein. Beispiele für entsprechende Erfassungseinrichtungen sind demnach Erfassungseinrichtungen zur Erfassung des Pegels, d. h. z. B. des Wasserstands, eines das Bauwerk durchströmenden Fluids, d. h. z. B. Abwasser, Erfassungseinrichtungen zur Erfassung der chemischen Zusammensetzung eines das Bauwerk durchströmenden Fluids, d. h. einer Flüssigkeit oder eines Gases, Erfassungseinrichtungen zur Erfassung der Temperatur in dem Bauwerk und/oder eines das Bauwerk durchströmenden Fluids, Erfassungseinrichtungen zur Erfassung des Drucks in dem Bauwerk und/oder eines das Bauwerk durchströmenden Fluids, etc. Besonderes Beispiel eines Gegenstands ist eine Vorrichtung zur Halterung eines Köders (Köderbox). Eine entsprechende Vorrichtung kann ein in ein Bauwerk einsetzbares Gehäuseteil umfassen, welches wenigstens eine Köderplattform umfasst, welche wenigstens eine köderplattformseitige Durchgangsöffnung begrenzt, durch welche ein Schädling, d. h. z. B. ein Nagetier, zu einem in dem Gehäuseteil angeordneten Köder gelangen kann. Als entsprechender Gegenstand kommt beispielhaft ebenso eine zum zumindest abschnittsweisen, gegebenenfalls vollständigen, Verschluss eines Rohrs eingerichtete Rohrverschlusseinrichtung in Betracht. Eine entsprechende Rohrverschlusseinrichtung kann z. B. als Rückstauventileinrichtung ausgebildet sein oder wenigstens eine solche umfassen.

Zur Halterung eines entsprechenden Gegenstands umfasst die Vorrichtung eine Halterungseinrichtung. Die Halterungseinrichtung ist der funktionelle Bestandteil der Vorrichtung, welcher zur eigentlichen Halterung des wenigstens einen zu halternden Gegenstands in einem Bauwerk eingerichtet ist.

Die Halterungseinrichtung umfasst ein wenigstens einen ersten Halterungsabschnitt zur Halterung der Halterungseinrichtung an bzw. in einem Bauwerk umfassendes erstes Halterungseinrichtungselement und ein wenigstens einen zweiten Halterungsabschnitt zur Halterung der Halterungseinrichtung an bzw. in einem Bauwerk umfassendes zweites Halterungseinrichtungselement. Die Halterungseinrichtungselemente bzw. die diesen zugehörigen Halterungsabschnitte ermöglichen sonach eine Halterung der Halterungseinrichtung an bzw. in dem Bauwerk. Jeweilige Halterungsabschnitte bilden im bestimmungsgemäß in einem Bauwerk gehalterten Zustand der Halterungseinrichtung wenigstens einen Kontaktbereich, d. h. insbesondere eine Kontaktfläche, mit dem Bauwerk aus, über welche Haltekräfte zur Halterung der Halterungseinrichtung (nebst daran befestigtem Gegenstand) in dem Bauwerk übertragbar sind. Jeweilige Halterungsabschnitte umfassen sonach wenigstens einen Kontaktbereich, welcher im in einem Bauwerk gehalterten Zustand der Halterungseinrichtung an einem Wandungsabschnitt des Bauwerks anliegt. Durch die Halterung der Halterungseinrichtung an bzw. in einem Bauwerk ist eine Halterung eines Gegenstands an bzw. in dem Bauwerk möglich, als der Gegenstand, wie sich im Weiteren ergibt, an der Halterungseinrichtung befestigbar bzw. befestigt ist. Die Halterung des Gegenstands an bzw. in dem Bauwerk erfolgt sonach mittelbar über die Halterung der Halterungseinrichtung an bzw. in dem Bauwerk.

Bei jeweiligen Halterungseinrichtungselementen kann es sich z. B. um stangen- bzw. strebenartige längliche Bauelemente handeln. Das erste und/oder das zweite Halterungseinrichtungselement kann bzw. können demnach stangen- bzw. strebenartig ausgebildet sein. Das erste und/oder zweite Halterungseinrichtungselement kann bzw. können mithin als Halterungsstangen oder -streben bezeichnet bzw. erachtet werden.

Wenigstens das zweite Halterungseinrichtungselement ist zwischen einer auch als Haltestellung zu bezeichnenden bzw. zu erachtenden ersten Betriebsstellung, in welcher die Halterungseinrichtung über das zweite Halterungseinrichtungselement an bzw. in einem Bauwerk halterbar oder gehaltert ist, und einer auch als Nichthaltestellung zu bezeichnenden bzw. zu erachtenden zweiten Betriebsstellung, in welcher die Halterungseinrichtung nicht über das zweite Halterungseinrichtungselement an bzw. in einem Bauwerk halterbar oder gehaltert ist, bewegbar gelagert. Die erste Betriebsstellung des zweiten Halterungseinrichtungselements ermöglicht demnach eine stabile Halterung der Halterungseinrichtung in einem Bauwerk, die zweite Betriebsstellung des zweiten Halterungseinrichtungselements ermöglicht keine Halterung der Halterungseinrichtung in dem Bauwerk.

In der ersten Betriebsstellung des zweiten Halterungseinrichtungselements ist über die Halterungseinrichtung eine die Halterungseinrichtung in dem Bauwerk halternde Haltekraft ausübbar. Die typischerweise gegen das Bauwerk gerichtete Haltekraft, hierbei handelt es sich insbesondere um eine die Halterungseinrichtung in dem Bauwerk halternde Spannkraft, weshalb die erste Betriebsstellung des zweiten Halterungseinrichtungselements auch als Spannstellung bezeichnet bzw. erachtet werden kann, kann für unterschiedliche Ausführungen der Halterungseinrichtung unterschiedlich hoch sein; die Haltekraft kann z. B. derart hoch sein, dass die Halterungseinrichtung (nebst daran befestigtem Gegenstand) schwebend angeordnet in dem Bauwerk gehaltert ist. In jedem Fall ist die Haltekraft so hoch, dass eine stabile Halterung der Halterungseinrichtung (nebst daran befestigtem Gegenstand) an bzw. in einem Bauwerk möglich ist. Dies gilt auch für Fälle, in welchen ein Teil der Halterungseinrichtung, d. h. z. B. das erste Halterungseinrichtungselement, und/oder der Gegenstand durch einen Wandungsabschnitt des Bauwerks, d. h. z. B. einen Bodenwandungsabschnitt des Bauwerks, abgestützt ist.

Das zweite Halterungseinrichtungselement ist in der ersten Betriebsstellung typischerweise derart relativ zu dem Bauwerk, d. h. z. B. relativ zu einem Wandungsabschnitt des Bauwerks, bewegt, dass die Halterungseinrichtung stabil an bzw. in dem Bauwerk gehaltert ist. Das zweite Halterungseinrichtungselement ist dabei insbesondere derart gegen das Bauwerk, d. h. z. B. gegen einen Wandungsabschnitt des Bauwerks, bewegt, dass die Halterungseinrichtung stabil an bzw. in dem schachtartigen Bauwerk gehaltert ist. Das zweite Halterungseinrichtungselement ist in der ersten Betriebsstellung typischerweise derart gegen das Bauwerk, d. h. z. B. gegen einen Wandungsabschnitt des Bauwerks, verspannt, dass die Halterungseinrichtung stabil an bzw. in dem Bauwerk gehaltert ist. Selbstverständlich kann, insbesondere in der ersten Betriebsstellung des zweiten Halterungseinrichtungselements, auch das erste Halterungseinrichtungselement gegen das Bauwerk, d. h. z. B. gegen einen (gegenüber liegenden) Wandungsabschnitt des Bauwerks, verspannt sein. Die Halterungseinrichtungselemente können sonach einen Spannverbund bilden, über welchen die Halterungseinrichtung in dem Bauwerk verspannbar bzw. verspannt ist.

Bewegungen des zweiten Halterungseinrichtungselements können zumindest teilweise ungebremst erfolgen. Damit beschleunigt das zweite Halterungseinrichtungselement ausgehend von der zweiten Betriebsstellung in aufgrund seines Gewichts in der Abwärtsbewegung in die erste Betriebsstellung. Das zweite Halterungseinrichtungselement kann bei Erreichen eines Wandungsabschnitts des Bauwerks abrupt abgebremst werden, die dabei freiwerdende Beschleunigungsenergie kann sich bei entsprechender Ausgestaltung des Spannverbunds teilweise in nutzbringende Spannenergie umwandeln. Derart kann die Halterungseinrichtung gegebenenfalls bereits in eine stabile Haltelage gebracht werden, ohne dass das Einbringen einer zusätzlichen Spannkraft erhöhenden Kraft auf den Spannverbund erforderlich ist.

Die Möglichkeit der Überführung bzw. die Überführung wenigstens des zweiten Halterungseinrichtungselements in jeweilige Betriebsstellungen ermöglicht eine effiziente Montage und Demontage der Halterungseinrichtung in einem Bauwerk. Ist die Halterungseinrichtung zu montieren, ist wenigstens das zweite Halterungseinrichtungselement in die erste Betriebsstellung zu bewegen, ist die Halterungseinrichtung zu demontieren, ist wenigstens das zweite Halterungseinrichtungselement in die zweite Betriebsstellung zu bewegen. Das Grundprinzip von Montage- und Demontagevorgängen der Halterungseinrichtung basiert darauf, die Halterungseinrichtung beim Einbringen in ein Bauwerk in ihrer räumlichen Ausdehnung zu reduzieren, um keine (gleichzeitige) Berührung gegenüber liegender Wandungsabschnitte des Bauwerks zu haben, und beim Erreichen der ersten Betriebsstellung des zweiten Halterungseinrichtungselements die räumlich-körperliche Ausdehnung der Halterungseinrichtung zu vergrößern, um diese Berührung mit diesen Wandungsabschnitten gezielt herbeizuführen, um die Halterungseinrichtung zu haltern.

In allen Fällen sind die räumlich-körperlichen Abmessungen der Halterungseinrichtung in der zweiten Betriebsstellung des zweiten Halterungseinrichtungselements im Vergleich zu der ersten Betriebsstellung des zweiten Halterungseinrichtungselements derart reduziert, dass ein Einbringen und/oder Ausbringen (Entfernen) der Halterungseinrichtung in ein Bauwerk bzw. aus einem Bauwerk über eine einen, z. B. überirdischen, Zugang in das Bauwerk ermöglichende Zugangsöffnung ermöglicht ist. Die zweite Betriebsstellung des zweiten Halterungseinrichtungselements ermöglicht sonach ein einfaches und schnelles Einbringen und/oder Ausbringen (Entfernen) der Halterungseinrichtung in ein Bauwerk bzw. aus einem Bauwerk über eine einen Zugang in das Bauwerk ermöglichende Zugangsöffnung. Es ist typischerweise nicht erforderlich, dass eine Person hierfür in das Bauwerk steigt. Es ist typischerweise auch nicht erforderlich, dass die Halterungseinrichtung durch ein ein Anbohren des Bauwerks erforderndes Anschrauben mit dem Bauwerk befestigt wird; die Montage der Halterungseinrichtung ist beschädigungs- bzw. zerstörungsfrei.

Insgesamt liegt eine Vorrichtung zur Halterung wenigstens eines in einem Bauwerk zu halternden Gegenstands vor, welche eine effiziente Halterung von in einem Bauwerk zu halternden Gegenständen ermöglicht.

Zur Stabilisierung der Halterungseinrichtung kann das erste und/oder zweite Halterungseinrichtungselement mehrere, insbesondere in einer horizontalen Ebene, versetzt angeordnete Halterungsabschnitte umfassen. Konstruktiv könnte dies z. B. derart umgesetzt sein, dass ein jeweiliges Halterungseinrichtungselement als Quertraverse ausgebildet ist, dessen jeweilige Enden im Montagzustand der Vorrichtung in einem Bauwerk gegen die Wandungsabschnitte des Bauwerks drücken. Für jede dieser Quertraversen würden sich dann mehrere Kontaktbereiche zu den Wandungsabschnitten des Bauwerks ergeben.

Der Gegenstand ist, wie erwähnt, an der Halterungseinrichtung, d. h. an dem ersten und/oder zweiten Halterungseinrichtungselement, befestigbar bzw. befestigt. An dem ersten und/oder zweiten Halterungseinrichtungselement kann bzw. können hierfür wenigstens eine Befestigungsschnittstelle angeordnet oder ausgebildet sein, welche zur Befestigung wenigstens eines vermittels der Halterungseinrichtung zu halternden Gegenstands eingerichtet ist. Eine Befestigungsschnittstelle kann eine mechanische, d. h. insbesondere eine kraft- und/oder formschlüssige, Befestigung des Gegenstands an einem jeweiligen Halterungseinrichtungselement ermöglichen, wozu die Befestigungsschnittstelle wenigstens ein Befestigungselement, d. h. z. B. ein Kraft- und/oder Formschlusselement, umfasst, welches eingerichtet ist, unter Ausbildung einer Befestigung des Gegenstands an dem jeweiligen Halterungseinrichtungselement mit einem korrespondieren Befestigungselement, d. h. z. B. einem korrespondierenden Kraft- und/oder Formschlusselement, an dem Gegenstand zusammenzuwirken. Bei entsprechenden Kraft- und/oder Formschlusselementen kann es sich z. B. um Schraubelemente, d. h. z. B. Schraubbolzen und Schraubaufnahmen, und/oder Rastelemente, d. h. z. B. Rastvorsprünge und Rastaufnahmen, handeln.

Unabhängig von der konkreten Art der Befestigung, ist die Befestigungsschnittstelle insbesondere für eine (beschädigungs- bzw. zerstörungsfrei) lösbare Befestigung eines Gegenstands an einem jeweiligen Halterungseinrichtungselement eingerichtet; die Befestigung eines Gegenstands an dem jeweiligen Halterungseinrichtungselement kann sonach beliebig aufgehoben und wiederhergestellt werden.

Im Zusammenhang mit der bewegbaren Lagerung des zweiten Halterungseinrichtungselements in bzw. zwischen jeweilige(n) Betriebsstellungen sind unterschiedliche, jedoch miteinander kombinierbare Ausführungsformen denkbar, wobei beispielhafte Ausführungsformen im Folgenden näher beschrieben werden. Wie erwähnt, sind die räumlich-körperlichen Abmessungen der Halterungseinrichtung in der zweiten Betriebsstellung des zweiten Halterungseinrichtungselements im Vergleich zu der ersten Betriebsstellung des zweiten Halterungseinrichtungselements derart reduziert, dass ein Einbringen und/oder Ausbringen (Entfernen) der Halterungseinrichtung in ein Bauwerk bzw. aus einem Bauwerk über eine einen Zugang in das Bauwerk ermöglichende Zugangsöffnung ermöglicht ist.

Gemäß einer bevorzugten beispielhaften Ausführungsform ist das zweite Halterungseinrichtungselement, insbesondere relativ zu dem ersten Halterungseinrichtungselement, schwenkbar gelagert, wobei eine erste Schwenkstellung des zweiten Halterungseinrichtungselements mit der ersten Betriebsstellung des zweiten Halterungseinrichtungselements korreliert und eine zweite Schwenkstellung des zweiten Halterungseinrichtungselements mit der zweiten Betriebsstellung des zweiten Halterungseinrichtungselements korreliert. In dieser Ausführungsform umfasst die Halterungseinrichtung sonach typischerweise eine, z. B. durch ein Schwenkgelenk gebildete oder wenigstens ein solches umfassende, Schwenkeinrichtung, über welche eine schwenkbare Lagerung des zweiten Halterungseinrichtungselements relativ zu dem ersten Halterungseinrichtungselement möglich ist. Das zweite Halterungseinrichtungselement kann demnach als schwenkbar gelagerter Ausleger bezeichnet bzw. erachtet werden, welcher relativ zu dem ersten Halterungseinrichtungselement verschwenkbar gelagert ist. Das zweite Halterungseinrichtungselement kann in der ersten Schwenkstellung z. B. einen Winkel von ca. 90° relativ zu dem ersten Halterungseinrichtungselement und in der zweiten Schwenkstellung einen Winkel größer oder kleiner 90°, d. h. z. B. einen Winkel von mehr als 100° oder weniger als 80°, relativ zu dem ersten Halterungseinrichtungselement einnehmen. Denkbar ist es auch, dass das zweite Halterungseinrichtungselement in der ersten Schwenkstellung einen Winkel größer als 90°, d. h. z. B. einen Winkel von ca. 110°, relativ zu dem ersten Halterungseinrichtungselement und in der zweiten Schwenkstellung einen Winkel größer oder kleiner 110°, d. h. z. B. einen Winkel von mehr als 120° oder (deutlich) weniger als 100°, relativ zu dem ersten Halterungseinrichtungselement einnimmt. Die Winkel des zweiten Halterungseinrichtungselements in der ersten Schwenkstellung hängen insbesondere von der konkreten Art der Befestigung der Halterungseinrichtung, d. h. insbesondere dem Umstand, ob diese durch ein Verspannen oder Verkeilen erfolgt, ab. Diese Ausführungsform geht typischerweise mit einem Verspannen der Halterungseinrichtung in dem Bauwerk einher; die Befestigung der Halterungseinrichtung in dem Bauwerk erfolgt sonach typischerweise über ein Verspannen der Halterungseinrichtung in dem Bauwerk.

Gemäß einer weiteren beispielhaften Ausführungsform kann die Halterungseinrichtung wenigstens zwei, insbesondere gelenkschenkelartig ausgebildete, Halterungseinrichtungselemente umfassen, wobei die wenigstens zwei Halterungseinrichtungselemente, insbesondere über wenigstens eine diese gelenkig koppelnde Gelenkeinrichtung, schwenkbar relativ zueinander gelagert sind, wobei eine erste Schwenkstellung der Halterungseinrichtungselemente mit der ersten Betriebsstellung des zweiten Halterungseinrichtungselements korreliert und eine zweite Schwenkstellung der Halterungseinrichtungselemente mit der zweiten Betriebsstellung des zweiten Halterungseinrichtungselements korreliert. In dieser Ausführungsform umfasst die Halterungseinrichtung sonach typischerweise eine, z. B. durch ein Kniehebelgelenk gebildete oder wenigstens ein solches umfassende, Gelenkeinrichtung, über welche eine schwenkbare Lagerung der gelenkig gekoppelten Halterungseinrichtungselemente relativ zueinander möglich ist. Die Halterungseinrichtungselemente können demnach als schwenkbar gelagerte Ausleger bezeichnet bzw. erachtet werden, welche relativ zueinander verschwenkbar gelagert sind. Die Halterungseinrichtungselemente können in der ersten Schwenkstellung z. B. einen Winkel von ca. 180° und in der zweiten Schwenkstellung einen Winkel größer oder kleiner 180°, d. h. z. B. einen Winkel von mehr als 190° oder weniger als 170°, einschließen. Diese Ausführungsform geht typischerweise mit einem Verkeilen der Halterungseinrichtung in dem Bauwerk einher; die Befestigung der Halterungseinrichtung in dem Bauwerk erfolgt sonach typischerweise über ein Verkeilen der Halterungseinrichtung in dem Bauwerk.

Gemäß einer weiteren beispielhaften Ausführungsform kann das zweite Halterungseinrichtungselement wenigstens zwei, insbesondere teleskopartig angeordnete oder ausgebildete, Halterungseinrichtungselementsegmente umfassen, wobei ein Halterungseinrichtungselementsegment relativ zu wenigstens einem weiteren Halterungseinrichtungselementsegment, insbesondere teleskopartig, zwischen einer ausgefahrenen Stellung und einer eingefahrenen Stellung bewegbar gelagert ist, wobei die ausgefahrene Stellung mit der ersten Betriebsstellung des zweiten Halterungseinrichtungselements korreliert und die eingefahrene Stellung mit der zweiten Betriebsstellung des zweiten Halterungseinrichtungselements korreliert. In dieser Ausführungsform umfasst die Halterungseinrichtung sonach typischerweise eine, z. B. durch eine Teleskopeinrichtung gebildete oder wenigstens eine solche umfassende, Verlängerungseinrichtung, über welche eine Verlängerung und/oder Verkürzung des zweiten Halterungseinrichtungselements über eine, typischerweise lineare, Relativbewegung eines Halterungseinrichtungselementsegments relativ zu einem weiteren Halterungseinrichtungselementsegment, d. h. ein Aus- und/oder Einfahren eines Halterungseinrichtungselementsegments, möglich ist. Das zweite Halterungseinrichtungselementsegment kann demnach als teleskopartig gelagerter Ausleger bezeichnet bzw. erachtet werden, welcher relativ zu dem ersten Halterungseinrichtungselementsegment bewegbar gelagert ist. Auch hier gilt, dass der zweite Halterungsabschnitt typischerweise an dem zweiten Halterungseinrichtungselementsegment angeordnet oder ausgebildet ist. Diese Ausführungsform geht typischerweise mit einem Verspannen der Halterungseinrichtung in dem Bauwerk einher; die Befestigung der Halterungseinrichtung in dem Bauwerk erfolgt sonach typischerweise über ein Verspannen der Halterungseinrichtung in dem Bauwerk.

In einer bzw. der Ausführungsform, in welcher das zweite Halterungseinrichtungselement wenigstens zwei, insbesondere teleskopartig angeordnete, Halterungseinrichtungselementsegmente umfasst, kann ein Halterungseinrichtungselementsegment relativ zu wenigstens einem weiteren Halterungseinrichtungselementsegment, insbesondere teleskopartig, stufenlos bewegbar gelagert sein. Ein Halterungseinrichtungselementsegment kann sonach stufenlos relativ zu wenigstens einem weiteren Halterungseinrichtungselementsegment bewegbar, d. h. z. B. teleskopartig ausziehbar, sein. Das zweite Halterungseinrichtungselement kann derart durch entsprechende Bewegung eines Halterungseinrichtungselementsegments relativ zu wenigstens einem weiteren Halterungseinrichtungselementsegment beliebig in seiner Länge variiert werden. Das zweite Halterungseinrichtungselement kann derart an verschiedene Schachtabmessungen, d. h. insbesondere an verschiedene Schachtinnendurchmesserabmessungen, anpassbar sein.

Dem zweiten Halterungseinrichtungselement kann dabei eine Arretiereinrichtung zuordenbar oder zugeordnet sein, welche eingerichtet ist, ein bzw. das relativ zu wenigstens einem weiteren Halterungseinrichtungselementsegment bewegbar gelagerte Halterungseinrichtungselementsegment in beliebigen Positionen relativ zu wenigstens einem weiteren Halterungseinrichtungselementsegment zu arretieren und somit zu fixieren. Eine entsprechende Arretiereinrichtung ist sonach im Allgemeinen zur Erzeugung einer das relativ zu wenigstens einem weiteren Halterungseinrichtungselementsegment bewegbar gelagerte Halterungseinrichtungselementsegment in einer beliebigen Position arretierenden Arretierkraft eingerichtet. Eine entsprechende Arretiereinrichtung kann z. B. als Klemm- oder Spanneinrichtung ausgebildet sein bzw. wenigstens eine solche umfassen. Eine entsprechende Klemm- oder Spanneinrichtung kann konkret z. B. als Klemm- oder Spannschelle oder als Klemm- oder Spannmanschette ausgebildet sein bzw. wenigstens eine solche umfassen.

Insgesamt kann diese stufenlos arretierbare Lösung in den Setzvorgang bzw. in den Bewegungsablauf des Setzvorgangs integriert werden. Bei einem Setzvorgang kann die Länge der Halterungseinrichtungselemente, d. h. insbesondere die Länge des zweiten Halterungseinrichtungselements, bis kurz vor dem Erreichen der ersten Betriebsstellung, (zunächst) ohne Arretierung, z. B. unter Zuhilfenahme einer Libelle, auf das gewünschte Maß eingestellt werden, ohne die Schachtabmessungen zu kennen oder zu messen. Vor dem Erreichen der ersten Betriebsstellung werden die Halterungseinrichtungselementsegmente und so die gesamte Vorrichtung zu einem starren Teil, um so bzw. dann die erforderlichen Kräfte aufbauen zu können.

Aus den vorstehend beschriebenen beispielhaften Ausführungsformen ergibt sich, dass die Befestigung der Halterungseinrichtung in dem Bauwerk insbesondere über ein Verspannen oder Verkeilen erfolgen kann. Die Art der Befestigung hat typischerweise einen Einfluss auf die geometrisch-konstruktive sowie strukturelle Auslegung der Halterungseinrichtung bzw. der Halterungseinrichtungselemente. Im Falle eines Verspannens der Halterungseinrichtung ist diese typischerweise elastisch-flexibel ausgeführt, d. h. sie umfasst wenigstens einen elastisch-flexiblen, d. h. insbesondere auch stauchbaren, verspannbaren Bestandteil d. h. z. B. ein einen elastisch-flexibles bzw. entsprechend ausgeführtes Halterungseinrichtungselement. Im Falle eines Verkeilens der Halterungseinrichtung ist diese typischerweise starr ausgeführt, d. h. sie umfasst diese wenigstens einen starren verkeilbaren Bestandteil, d. h. z. B. ein starres bzw. entsprechend ausgeführtes Halterungseinrichtungselement.

Beispielsweise kann ein zwischen einer ersten und einer zweiten Schwenkstellung, wobei die erste Schwenkstellung mit der ersten Betriebsstellung des zweiten Halterungseinrichtungselements und die zweite Schwenkstellung mit der zweiten Betriebsstellung des zweiten Halterungseinrichtungselements korreliert, insbesondere relativ zu dem ersten Halterungseinrichtungselement, schwenkbar gelagertes zweites Halterungseinrichtungselement mit einem wenigstens zwei, insbesondere teleskopartig angeordnete oder ausgebildete, Halterungseinrichtungselementsegmente, wobei eine ausgefahrene Stellung eines Halterungseinrichtungselementsegments mit der ersten Betriebsstellung des zweiten Halterungseinrichtungselements korreliert und eine eingefahrene Stellung des Halterungseinrichtungselementsegments mit der zweiten Betriebsstellung des zweiten Halterungseinrichtungselements korreliert, umfassenden zweiten Halterungseinrichtungselement kombiniert werden.

Für alle Ausführungsformen gilt, dass die Vorrichtung eine dem zweiten Halterungseinrichtungselement bzw. dem zweiten Halterungseinrichtungselementsegment zugeordnete Sicherungseinrichtung umfasst, welche eingerichtet ist, das zweite Halterungseinrichtungselement bzw. das zweite Halterungseinrichtungselementsegment in der zweiten Betriebsstellung bzw. in einer mit der zweiten Betriebsstellung korrespondierenden Ausrichtung zu sichern. Die Sicherungseinrichtung kann hierzu wenigstens ein, z. B. an dem ersten Halterungseinrichtungselement bzw. dem ersten Halterungseinrichtungselementsegment angeordnetes oder ausgebildetes Sicherungselement, d. h. z. B. ein Kraft- und/oder Formschlusselement, umfassen, welches eingerichtet ist, unter Ausbildung einer Sicherung des zweiten Halterungseinrichtungselements bzw. des zweiten Halterungseinrichtungselementsegments in der zweiten Betriebsstellung mit einem korrespondieren Befestigungselement, d. h. z. B. einem korrespondierenden Kraft- und/oder Formschlusselement, an dem zweiten Halterungseinrichtungselement bzw. dem zweiten Halterungseinrichtungselementsegment zusammenzuwirken. Bei entsprechenden Kraft- und/oder Formschlusselementen kann es sich z. B. um Rastelemente, d. h. z. B. Rastvorsprünge und Rastaufnahmen, handeln.

Für alle Ausführungsformen gilt ferner, dass der erste und/oder der zweite Halterungsabschnitt mit einer die bzw. eine die Halterungseinrichtung in dem Bauwerk halternde Haltekraft erhöhenden Oberfläche bzw. (dreidimensionalen) Oberflächenstrukturierung versehen sein kann. Beide Prinzipien zielen auf eine Erhöhung der Reibung zwischen dem jeweiligen Halterungsabschnitt und dem Bauwerk ab. Eine entsprechende Oberfläche bzw. Oberflächenstrukturierung kann demnach z. B. durch einen Reibbelag bzw. eine Verzahnung im Bereich des das Bauwerk kontaktierenden Kontaktbereichs des Halterungsabschnitts gebildet sein. Mit der gleichen Zielsetzung kann erste und/oder der zweite Halterungsabschnitt auch an eine spezielle Formgebung eines Wandungsabschnitts des Bauwerks angepasst sein.

Weiter gilt für alle Ausführungsformen, dass dem zweiten Halterungseinrichtungselement, gegebenenfalls zusätzlich, wenigstens eine Spanneinrichtung zugeordnet sein kann, welche zur Erzeugung bzw. Erhöhung einer das zweite Halterungseinrichtungselement in der ersten Betriebsstellung gegen ein Bauwerk verspannenden Spannkraft eingerichtet ist. Die Wirkrichtung der Spannkraft entspricht typischerweise der Wirkrichtung der über die Halterungseinrichtung ausübbaren Haltekraft, sodass die Spannkraft die Haltekraft erhöht. Der erwähnte Spannverbund kann sonach zusätzlich eine gesonderte Spanneinrichtung umfassen, welche die Aufnahme bzw. Freigabe von Spannkräften ermöglicht. Die Spanneinrichtung kann z. B. als Spannfeder ausgebildet sein oder wenigstens eine solche umfassen. Eine entsprechende Spannfeder kann in Spannrichtung stauchbar und in allen weiteren Richtungen starr geführt oder gehaltert sein. Die Spannfeder kann konkret z. B. als das zweite Halterungseinrichtungselement - wie erwähnt, handelt es sich bei diesem insbesondere um ein stangen- bzw. strebenartiges längliches Bauelement - zumindest abschnittsweise umgebende oder in dieses integrierte Schraubenfeder ausgebildet sein.

Das zweite Halterungseinrichtungselement kann wenigstens eine eine Durchgriffsmöglichkeit für einen vermittels der Halterungseinrichtung zu halternden Gegenstand und/oder für ein Betätigungselement, insbesondere ein Betätigungswerkzeug, zur Betätigung einer Funktionalität eines vermittels der Halterungseinrichtung gehalterten Gegenstands schaffende Öffnung (Durchgriffsöffnung) aufweisen. Eine entsprechende Öffnung verbessert die Handhabung der Vorrichtung insbesondere im Zusammenhang mit dem Einbringen und/oder Ausbringen (Entfernen) eines Gegenstands in das bzw. aus dem Bauwerk respektive entsprechenden Betätigungen von Funktionalitäten eines Gegenstands. Eine entsprechende Öffnung kann z. B. durch eine Ausnehmung in dem zweiten Halterungseinrichtungselement oder eine zumindest abschnittsweise segmentierte, z. B. ring-, rauten- oder V-förmige, Ausbildung des zweiten Halterungseinrichtungselements, wobei eine eine entsprechende Durchgangsmöglichkeit schaffende Öffnung durch einen sich zwischen jeweiligen Halterungseinrichtungselementsegmenten erstreckenden, z. B. ring-, rauten- oder V-förmigen, Innenraum gebildet sein kann.

Die Vorrichtung umfasst neben der Halterungseinrichtung eine Setzeinrichtung, welche zum Einbringen bzw. Einsetzen der Halterungseinrichtung in ein Bauwerk eingerichtet ist. Die Setzeinrichtung kann auch zum Ausbringen bzw. Entfernen der Halterungseinrichtung aus einem Bauwerk eingerichtet sein. Die Setzeinrichtung kann insbesondere eingerichtet sein, das zweite Halterungseinrichtungselement in die erste und/oder zweite Betriebsstellung zu überführen. Die Setzeinrichtung kann z. B. derart an der Halterungseinrichtung, d. h. insbesondere dem zweiten Halterungseinrichtungselement, angreifen, dass dieses in die erste und/oder zweite Betriebsstellung bewegbar ist. Die Setzeinrichtung kann auch eingerichtet sein, die bzw. eine Spannkraft erhöhende Kraft in das zweite Halterungseinrichtungselement einzubringen. Dies kann z. B. durch Aufbringen einer Druck- oder Zugkraft, d. h. z. B. durch einen Druck- oder Zugvorgang, auf das zweite Halterungseinrichtungselement erfolgen.

Die Setzeinrichtung umfasst wenigstens ein einen Teil einer ersten Kopplungsschnittstelle bildendes erstes Kopplungselement zur, insbesondere (beschädigungs- bzw. zerstörungsfrei) lösbaren, Kopplung der Setzeinrichtung mit der Halterungseinrichtung. Entsprechend umfasst die Halterungseinrichtung wenigstens ein einen Teil einer zu der setzeinrichtungsseitigen Kopplungsschnittstelle korrespondierenden ersten Gegenkopplungsschnittstelle bildendes erstes Gegenkopplungselement.

Die Setzeinrichtung kann ferner wenigstens ein einen Teil einer zweiten Kopplungsschnittstelle bildendes zweites Kopplungselement zur, insbesondere (beschädigungs- bzw. zerstörungsfrei) lösbaren, Kopplung der Setzeinrichtung mit der Halterungseinrichtung umfassen. Entsprechend kann die Halterungseinrichtung wenigstens ein einen Teil einer zu der setzeinrichtungsseitigen zweiten Kopplungsschnittstelle korrespondierenden zweiten Gegenkopplungsschnittstelle bildendes zweites Gegenkopplungselement umfassen.

Das setzeinrichtungsseitige erste Kopplungselement ist an einem einen Teil einer setzeinrichtungsseitigen Druckeinrichtung bildenden Druckelement angeordnet oder ausgebildet, über welches eine auf die Halterungseinrichtung, d. h. insbesondere das zweite Halterungseinrichtungselement, wirkende Druckkraft ausübbar ist. Durch Ausübung einer entsprechenden Druckkraft kann das zweite Halterungseinrichtungselement in die erste Betriebsstellung bewegt werden.

Das setzeinrichtungsseitige zweite Kopplungselement kann an einem einen Teil einer setzeinrichtungsseitigen Zugeinrichtung bildenden Zugelement, d. h. z. B. einem Band, einer Kette, einem Seil, etc., angeordnet oder ausgebildet sein, über welches - z. B. im mit einem halterungseinrichtungsseitigen Gegenkopplungselement gekoppelten Zustand - eine auf die Halterungseinrichtung, d. h. insbesondere das zweite Halterungseinrichtungselement, wirkende Zugkraft ausübbar ist. Durch Ausübung einer entsprechenden Zugkraft kann das zweite Halterungseinrichtungselement in die zweite Betriebsstellung bewegt werden.

Ein jeweiliges setzeinrichtungsseitiges Kopplungselement kann mit einem jeweiligen halterungseinrichtungsseitigen Gegenkopplungselement, z. B. mechanisch, d. h. insbesondere form- und/oder kraftschlüssig, und/oder magnetisch zusammenwirken. Bei einem setzeinrichtungsseitigen Kopplungselement kann es sich z. B. um ein Eingriffselement, welches zum Eingriff in ein Aufnahmeelement eingerichtet ist, handeln. Bei einem halterungseinrichtungsseitigen Gegenkopplungselement kann es sich entsprechend um ein Aufnahmeelement handeln, in welches ein entsprechendes Eingriffselement eingreifen kann. Selbstverständlich ist eine umgekehrte Konfiguration ebenso denkbar. Gemäß einer ersten beispielhaften Ausführungsform kann es sich bei einem setzeinrichtungsseitigen Kopplungselement demnach z. B. um ein hakenartiges Hakenelement, welches zum Eingriff in ein schlaufen- oder ösenartiges Schlaufen- oder Ösenelement eingerichtet ist, handeln. Bei einem halterungseinrichtungsseitigen Gegenkopplungselement kann es sich entsprechend um ein schlaufen- oder ösenartiges Schlaufen- oder Ösenelement handeln, in welches ein entsprechendes Hakenelement eingreifen kann. Selbstverständlich ist eine umgekehrte Konfiguration ebenso denkbar. Gemäß einer zweiten beispielhaften Ausführungsform kann es sich bei einem setzeinrichtungsseitigen Kopplungselement z. B. um ein rastvorsprungartiges Rastelement, welches zum rastenden Eingriff in ein rastaufnahmeartiges Gegenrastelement eingerichtet ist, handeln. Bei einem halterungseinrichtungsseitigen Gegenkopplungselement kann es sich entsprechend um ein rastaufnahmeartiges Gegenrastelement handeln, in welches ein entsprechendes Rastelement rastend eingreifen kann. Selbstverständlich ist eine umgekehrte Konfiguration ebenso denkbar.

Bei einem setzeinrichtungsseitigen Kopplungselement kann es sich z. B. um ein (permanent)magnetisches oder magnetisierbares Magnetelement, welches zur magnetisch anziehenden Wechselwirkung mit einem magnetischen oder magnetisierbaren Gegenmagnetelement eingerichtet ist, handeln. Bei einem halterungseinrichtungsseitigen Gegenkopplungselement kann es sich entsprechend um ein (permanent)magnetisches oder magnetisierbares Gegenmagnetelement handeln, welches mit einem entsprechenden setzeinrichtungsseitigen Magnetelement magnetisch anziehend wechselwirkt.

Die Setzeinrichtung umfasst ein stangen- oder strebenartiges, gegebenenfalls, insbesondere teleskopartig, verlängerbar ausgebildetes, Setzeinrichtungselement, an welchem wenigstens das wenigstens eine erste und/oder zweite Kopplungselement angeordnet oder ausgebildet ist bzw. sind.

Die Vorrichtung kann eine Erfassungseinrichtung umfassen, welche zur Erfassung der ersten und/oder zweiten Betriebsstellung des zweiten Halterungseinrichtungselements sowie zur Erzeugung einer die erste und/oder zweite Betriebsstellung des zweiten Halterungseinrichtungselements beschreibenden Erfassungsinformation eingerichtet ist. Die Erfassungseinrichtung kann die erste und/oder zweite Betriebsstellung des zweiten Halterungseinrichtungselements z. B. über eine räumliche Ausrichtung des zweiten Halterungseinrichtungselements, eine auf das zweite Halterungseinrichtungselement wirkende Kraft, etc. erfassen. Eine entsprechende Erfassungsinformation kann über eine der Erfassungseinrichtung zugeordnete Ausgabeeinrichtung ausgegeben werden. Die Ausgabe einer entsprechenden Erfassungsinformation umfasst eine tatsächliche Ausgabe akustischer und/oder optischer und/oder haptischer Signale sowie eine Übertragung einer entsprechenden Erfassungsinformation an eine externe Einrichtung, d. h. z. B. eine mit einer entsprechenden Übertragungsschnittelle ausgestattete Datenverarbeitungseinrichtung, welche zur datenmäßigen Verarbeitung der Erfassungsinformation eingerichtet ist. Die externe Einrichtung kann z. B. ein mobiles Endgerät, wie z. B. ein Laptop, Smartphone, Smartwatch, Tablet-PC, etc., und/oder ein Netzwerkspeicher (Cloud-Speicher) sein.

Über eine entsprechende Erfassungsinformation kann ein Benutzer informiert werden, ob die von ihm, z. B. durch Betätigen der Setzeinrichtung gegen die Halterungseinrichtung eingebrachte Kraft zur Erreichung der erforderlichen Haltekraft ausreicht. Durch die durch die in den Spannverbund integrierte Erfassungseinrichtung erzeugte Erfassungsinformation, die signalisieren kann, wann eine gewünschte und erforderlicher Kraft erreicht ist, ist ein Benutzer in der Lage, den Drückvorgang der Setzeinrichtung entsprechend zu dosieren und gegebenenfalls sofort einzustellen. Damit kann eine Überbeanspruchung des Spannverbunds und auch die Demontage erleichtert werden.

Ein weiteres Beispiel einer entsprechenden Erfassungseinrichtung kann eine in einer hierfür vorgesehenen an dem zweiten Halterungseinrichtungselement befestigbaren bzw. befestigten Aufnahmeeinrichtung angeordnete oder ausgebildete Libelle sein, anhand welcher eine Ausrichtung des zweiten Halterungseinrichtungselements relativ zu dem ersten Halterungseinrichtungselement erkennbar ist. Die Aufnahmeeinrichtung kann einen Aufnahme- bzw. Lagerungskörper mit einer bezüglich einer horizontalen Referenzebene um einen bestimmten Winkel, d. h. z. B. einen Winkel von 10°, geneigt ausgerichteten Aufnahmekörper- bzw. Lagerkörperabschnitt aufweisen. Der bestimmte Winkel resultiert typischerweise aus einer bestimmungsgemäßen winkligen Ausrichtung des zweiten Halterungseinrichtungselements, insbesondere relativ zu dem ersten Halterungseinrichtungselement, in der ersten Betriebsstellung. In dem Aufnahmekörper- bzw. Lagerkörperabschnitt kann eine, z. B. durch eine Ausnehmung realisierte, Aufnahme- bzw. Lagerungsmöglichkeit für die Libelle ausgebildet sein. Die Libelle ist sonach ebenso um den bestimmten Winkel geneigt bezüglich der horizontalen Referenzebene ausgerichtet. Die in der Libelle befindliche Gasblase ist sonach dann zentriert, wenn sich das zweite Halterungseinrichtungselement in der bestimmungsgemäßen winkligen Ausrichtung in der ersten Betriebsstellung befindet. Derart ist eine einfache, jedoch äußerst zuverlässige Erfassung der ersten Betriebsstellung möglich.

Die Erfindung betrifft auch ein Verfahren zum Einbringen einer erfindungsgemässen Vorrichtung in ein schachtartiges Bauwerk, sodass grundsätzlich sämtliche Ausführungen im Zusammenhang mit der Vorrichtung analog für das Verfahren gelten. Umgekehrt gelten sämtliche Ausführungen im Zusammenhang mit dem Verfahren analog für die Vorrichtung.

Das Verfahren zum Einbringen (Einsetzen) der Vorrichtung in ein Bauwerk umfasst die folgenden Schritte: Einbringen einer Halterungseinrichtung in Bauwerk, wobei das zweite Halterungseinrichtungselement der Halterungseinrichtung in die zweite Betriebsstellung bewegt ist, Überführen des zweiten Halterungseinrichtungselements von der zweiten Betriebsstellung in die erste Betriebsstellung unter Ausbildung einer Halterung der Halterungseinrichtung in dem Bauwerk. An der Halterungseinrichtung kann bereits ein zu halternder Gegenstand gehaltert sein oder im Nachhinein, d. h. nach Einbringen der Halterungseinrichtung in das Bauwerk, d. h. insbesondere nach Überführen des zweiten Halterungseinrichtungselements in die erste Betriebsstellung, gehaltert werden. Das Verfahren kann mit einer wie beschriebenen Setzeinrichtung durchgeführt bzw. die Durchführung des Verfahrens mit einer wie beschriebenen Setzeinrichtung erleichtert werden. Die Setzeinrichtung kann insbesondere dazu verwendet werden, die Halterungseinrichtung in das Bauwerk einzubringen sowie das zweite Halterungseinrichtungselement, z. B. durch Aufbringen einer entsprechenden Druckkraft auf das zweite Halterungseinrichtungselement, von der zweiten Betriebsstellung in die erste Betriebsstellung zu überführen.

Weiterhin betrifft die Erfindung ein Verfahren zum Ausbringen (Entfernen) einer erfindungsgemässen Vorrichtung aus einem schachtartigen Bauwerk, sodass grundsätzlich sämtliche Ausführungen im Zusammenhang mit der Vorrichtung analog für das Verfahren gelten. Umgekehrt gelten sämtliche Ausführungen im Zusammenhang mit dem Verfahren analog für die Vorrichtung.

Das Verfahren zum Ausbringen (Entfernen) der Vorrichtung aus einem schachtartigen Bauwerk umfasst die folgenden Schritte: Überführen des zweiten Halterungseinrichtungselements von der ersten Betriebsstellung in die zweite Betriebsstellung unter Auflösung einer Halterung der Halterungseinrichtung in dem Bauwerk, Ausbringen der Halterungseinrichtung aus dem Bauwerk, wobei das zweite Halterungseinrichtungselement der Halterungseinrichtung in die zweite Betriebsstellung bewegt ist. An der Halterungseinrichtung kann ein zu halternder Gegenstand gehaltert sein oder im Vorhinein, d. h. vor Ausbringen der Halterungseinrichtung aus dem Bauwerk, d. h. insbesondere vor Überführen des zweiten Halterungseinrichtungselements in die zweite Betriebsstellung, entfernt werden. Das Verfahren kann mit einer wie beschriebenen Setzeinrichtung durchgeführt bzw. die Durchführung des Verfahrens mit einer wie beschriebenen Setzeinrichtung erleichtert werden. Die Setzeinrichtung kann insbesondere dazu verwendet werden, das zweite Halterungseinrichtungselement, z. B. durch Aufbringen einer entsprechenden Zugkraft auf das zweite Halterungseinrichtungselement, von der ersten Betriebsstellung in die zweite Betriebsstellung zu überführen, sowie die Halterungseinrichtung aus dem Bauwerk auszubringen.

Die Erfindung ist anhand von Ausführungsbeispielen in den Zeichnungen erläutert. Dabei zeigen:

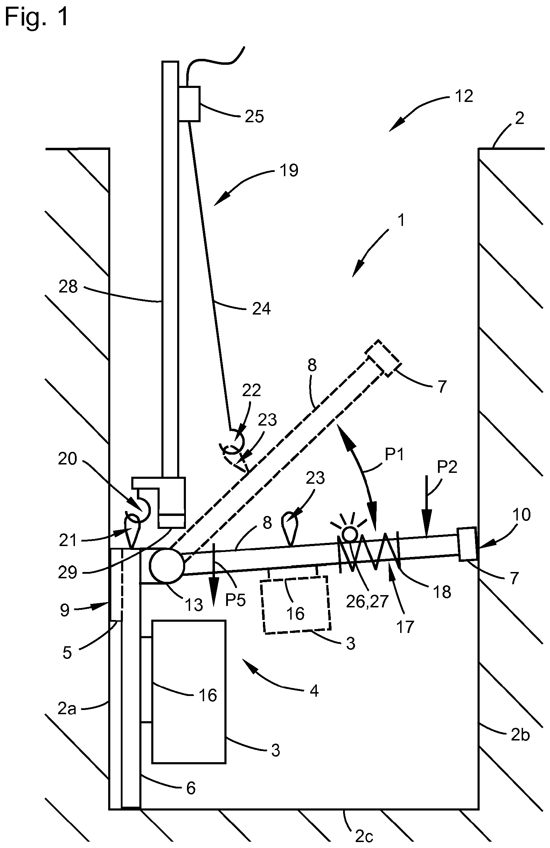

Fig. 1 - 3 jeweils eine Prinzipdarstellung einer Vorrichtung gemäß einem Ausführungsbeispiel.

Fig. 1 zeigt eine Prinzipdarstellung einer Vorrichtung 1 zur Halterung wenigstens eines in einem schachtartigen Bauwerk 2, d. h. z. B. einem einen Teil einer Abwasser führenden Kanalisation bildenden Abwasserkanalschacht, zu halternden Gegenstands 3 gemäß einem ersten Ausführungsbeispiel.

Bei dem vermittels der Vorrichtung 1 zu halternden Gegenstand 3 handelt es sich typischerweise um eine mit wenigstens einer technischen Funktionalität versehene technische Einrichtung. Konkret kann es sich bei dem Gegenstand 3 z. B. um eine ein oder mehrere Erfassungselemente, d. h. z. B. Sensorelemente, umfassende Erfassungseinrichtung zur Erfassung wenigstens eines chemischen und/oder physikalischen Parameters in dem Bauwerk 2, d. h. z. B. um eine Erfassungseinrichtung zur Erfassung des Pegels, d. h. z. B. des Wasserstands, eines das Bauwerk 2 durchströmenden Fluids, d. h. z. B. Abwasser, eine Erfassungseinrichtung zur Erfassung der chemischen Zusammensetzung eines das Bauwerk 2 durchströmenden Fluids, d. h. einer Flüssigkeit oder eines Gases, eine Erfassungseinrichtung zur Erfassung der Temperatur in dem Bauwerk 2 und/oder eines das Bauwerk 2 durchströmenden Fluids, eine Erfassungseinrichtung zur Erfassung des Drucks in dem Bauwerk 2 und/oder eines das Bauwerk 2 durchströmenden Fluids, etc. handeln. Ein weiteres Beispiel für einen Gegenstands 3 ist eine Vorrichtung zur Halterung eines Köders (Köderbox). Als entsprechender Gegenstand 3 kommt beispielhaft ebenso eine zum zumindest abschnittsweisen, gegebenenfalls vollständigen, Verschluss eines Rohrs eingerichtete Rohrverschlusseinrichtung in Betracht. Eine entsprechende Rohrverschlusseinrichtung kann z. B. als Rückstauventileinrichtung ausgebildet sein oder wenigstens eine solche umfassen.

Zur Halterung eines entsprechenden Gegenstands 3 umfasst die Vorrichtung 1 eine Halterungseinrichtung 4. Die Halterungseinrichtung 4 ist der funktionelle Bestandteil der Vorrichtung 1, welcher zur eigentlichen Halterung des zu halternden Gegenstands 3 in dem Bauwerk 2 eingerichtet ist. In Fig. 1 ist eine erste beispielhafte Halterungsmöglichkeit eines Gegenstands 3 an der Halterungseinrichtung 4 mit durchgezogener Linie und eine zweite beispielhafte Halterungsmöglichkeit eines Gegenstands 3 an der Halterungseinrichtung 4 mit gestrichelter Linie angedeutet.

Die Halterungseinrichtung 4 umfasst ein einen ersten Halterungsabschnitt 5 zur Halterung der Halterungseinrichtung 4 an bzw. in dem Bauwerk 2 umfassendes erstes Halterungseinrichtungselement 6 und ein einen zweiten Halterungsabschnitt 7 zur Halterung der Halterungseinrichtung 4 an bzw. in dem Bauwerk 2 umfassendes zweites Halterungseinrichtungselement 8. Die stangen- bzw. strebenartigen Halterungseinrichtungselemente 6, 8 bzw. die diesen zugehörigen Halterungsabschnitte 5, 7 ermöglichen sonach eine Halterung der Halterungseinrichtung 4 an bzw. in dem Bauwerk 2. Wie anhand der in den Fig. gezeigten Ausführungsbeispiele ersichtlich ist, bilden jeweilige Halterungsabschnitte 5, 7 im bestimmungsgemäß in einem Bauwerk 2 gehalterten Zustand der Halterungseinrichtung 4 Kontaktbereiche bzw. -flächen 9, 10 mit dem Bauwerk 2 bzw. entsprechenden (seitlichen) Wandungsabschnitten 2a, 2b des Bauwerks 2 aus, über welche Haltekräfte zur Halterung der Halterungseinrichtung 4 (nebst daran befestigtem Gegenstand 3) in dem Bauwerk 2 übertragbar sind. Jeweilige Halterungsabschnitte 5, 7 umfassen sonach jeweils einen Kontaktbereich 9, 10, welcher im in dem Bauwerk 2 gehalterten Zustand der Halterungseinrichtung 4 an einem Wandungsabschnitt 2a, 2b des Bauwerks 2 anliegt. Durch die Halterung der Halterungseinrichtung 4 an bzw. in dem Bauwerk 2 ist eine Halterung eines Gegenstands 3 an bzw. in dem Bauwerk 2 möglich, als der Gegenstand 3, wie anhand der Fig. ersichtlich, an der Halterungseinrichtung 4 befestigbar bzw. befestigt ist.

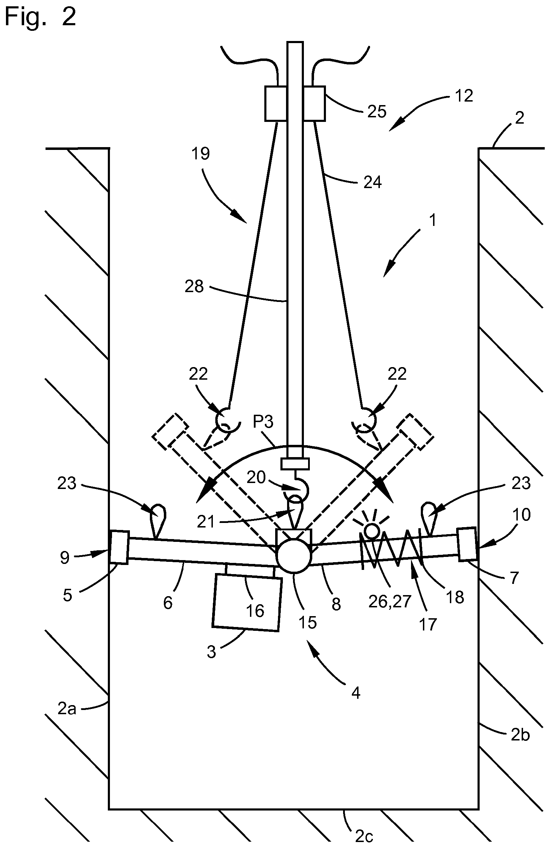

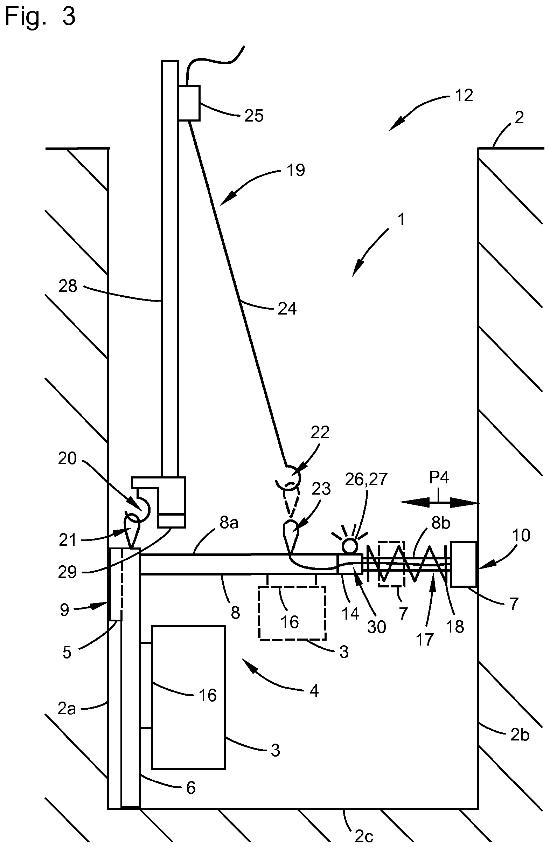

Die Befestigung der Halterungseinrichtung 4 in dem Bauwerk 2 kann insbesondere über ein Verspannen (vgl. Ausführungsbeispiele gemäß Fig. 1, 3) und/oder Verkeilen (vgl. Ausführungsbeispiel gemäß Fig. 2) erfolgen. Für ein Verspannen ist bzw. sollte wenigstens ein Bestandteil der Halterungseinrichtung 4 elastisch-flexibel, d. h. insbesondere stauchbar, ausgebildet sein, um eine zuverlässige Montage und Demontage der Halterungseinrichtung 4 zu gewährleisten. Jeweilige Halterungsabschnitte 5, 7 können daher elastisch-flexibel ausgebildet sein. Dies kann z. B. durch Ausbildung der Halterungsabschnitte 5, 7 aus einem elastisch-flexiblen Material, d. h. z. B. einem Elastomer, oder einer elastisch-flexiblen Materialstruktur, d. h. z. B. einer Schwächungselemente, wie Ausnehmungen, Öffnungen, etc., umfassenden Materialstruktur, realisiert sein. Für ein Verkeilen ist bzw. sollte wenigstens ein Bestandteil der Halterungseinrichtung 4 starr, d. h. insbesondere nicht stauchbar, ausgebildet sein, um eine zuverlässige Montage und Demontage der Halterungseinrichtung 4 zu gewährleisten. Jeweilige Halterungsabschnitte 5, 7 können daher starr ausgebildet sein. Dies kann z. B. durch Ausbildung der Halterungseinrichtungselemente 6, 8 sowie der Halterungsabschnitte 5, 7 aus einem starren Material, d. h. z. B. einem Metall oder Hartkunststoff, oder einer starren Materialstruktur, d. h. z. B. einer, z. B. rippenartige, Verstärkungselemente umfassenden Materialstruktur, realisiert sein.

Abhängig davon, in welcher Höhenlage sich die Halterungseinrichtung 4 nach dem Einbringen in das Bauwerk 2 befinden soll und welches Gewicht die Halterungseinrichtung 4 (nebst daran befestigtem Gegenstand 3) hat, kann der das erste Halterungseinrichtungselement 6, wie in Fig. 1 dargestellt, so verlängert sein bzw. werden, dass sich dieses zusätzlich an dem Bauwerk 2 abstützt. Eine Abstützung an dem Bauwerk 2, d. h. z. B. an einem Boden 2c des Bauwerks 2, kann zweckmäßig sein, wenn die Halterungseinrichtung 4 relativ schwer ist und die Einbauhöhe zum Bauwerk 2 konstant ist. Das erste Halterungseinrichtungselement 6 kürzer zu halten und nicht am Bauwerk 2 abzustützen, ist dann von Vorteil, wenn die Halterungseinrichtung 4 relativ leicht und in der Einbauhöhe zum Bauwerk 2 flexibel gehalten werden soll.

Wenigstens das zweite Halterungseinrichtungselement 8 ist zwischen einer auch als Haltestellung zu bezeichnenden bzw. zu erachtenden ersten Betriebsstellung (vgl. durchgezogene Darstellung), in welcher die Halterungseinrichtung 4 über das zweite Halterungseinrichtungselement 8 an bzw. in dem Bauwerk 2 halterbar bzw. gehaltert ist, und einer auch als Nichthaltestellung zu bezeichnenden bzw. zu erachtenden zweiten Betriebsstellung (vgl. gestrichelte Darstellung), in welcher die Halterungseinrichtung 4 nicht über das zweite Halterungseinrichtungselement 8 an bzw. in dem Bauwerk 2 halterbar bzw. gehaltert ist, bewegbar gelagert. Die erste Betriebsstellung des zweiten Halterungseinrichtungselements 8 ermöglicht demnach eine stabile Halterung der Halterungseinrichtung 4 in dem Bauwerk 2, die zweite Betriebsstellung des zweiten Halterungseinrichtungselements 8 ermöglicht keine Halterung der Halterungseinrichtung 4 in dem Bauwerk 2.

In der ersten Betriebsstellung des zweiten Halterungseinrichtungselements 8 ist über die Halterungseinrichtung 4, d. h. insbesondere das zweite Halterungseinrichtungselement 8 bzw. den dem zweiten Halterungseinrichtungselement 8 zugeordneten zweiten Halterungsabschnitt 7, eine die Halterungseinrichtung 4 in dem Bauwerk 2 halternde Haltekraft ausübbar. Die gegen das Bauwerk 2 bzw. entsprechende Wandungsabschnitte 2a, 2b des Bauwerks 2 gerichtete Haltekraft, hierbei handelt es sich um eine die Halterungseinrichtung 4 in dem Bauwerk 2 halternde Spannkraft, weshalb die erste Betriebsstellung des zweiten Halterungseinrichtungselements 8 auch als Spannstellung bezeichnet bzw. erachtet werden kann, kann für unterschiedliche Ausführungen der Halterungseinrichtung 4 unterschiedlich hoch sein; die Haltekraft kann z. B. derart hoch sein, dass die Halterungseinrichtung 4 (nebst daran befestigtem Gegenstand 3) schwebend angeordnet in dem Bauwerk 2 gehaltert ist.

Wie dargestellt, ist das zweite Halterungseinrichtungselement 8 in der ersten Betriebsstellung derart relativ zu dem Bauwerk 2, d. h. relativ zu einem Wandungsabschnitt 2b des Bauwerks 2, bewegt, dass die Halterungseinrichtung 4 stabil an bzw. in dem Bauwerk 2 gehaltert ist. Das zweite Halterungseinrichtungselement 8 ist in der ersten Betriebsstellung, wie erwähnt, derart gegen das Bauwerk 2, d. h. gegen einen Wandungsabschnitt 2b des Bauwerks 2, verspannt, dass die Halterungseinrichtung 4 stabil an bzw. in dem Bauwerk 2 gehaltert ist. Typischerweise ist in der ersten Betriebsstellung des zweiten Halterungseinrichtungselements 8 auch das erste Halterungseinrichtungselement 6 gegen das Bauwerk 2, d. h. gegen einen gegenüber liegenden Wandungsabschnitt 2a des Bauwerks 2, verspannt. Die Halterungseinrichtungselemente 6 bilden sonach, insbesondere mit den Halterungsabschnitten 5, 7, einen Spannverbund, über welchen die Halterungseinrichtung 4 in dem Bauwerk 2 verspannbar bzw. verspannt ist.

Die Möglichkeit der Überführung bzw. die Überführung wenigstens des zweiten Halterungseinrichtungselements 8 in jeweilige Betriebsstellungen ermöglicht eine effiziente Montage und Demontage der Halterungseinrichtung 4 in dem Bauwerk 2. Ist die Halterungseinrichtung 4 zu montieren, ist das zweite Halterungseinrichtungselement 8 in die erste Betriebsstellung zu bewegen, ist die Halterungseinrichtung 4 zu demontieren, ist das zweite Halterungseinrichtungselement 8 in die zweite Betriebsstellung zu bewegen. Es ist nicht erforderlich, dass die Halterungseinrichtung 4 durch ein ein Anbohren des Bauwerks 2 erforderndes Anschrauben mit dem Bauwerk 2 befestigt wird; die Montage der Halterungseinrichtung 4 ist beschädigungs- bzw. zerstörungsfrei.

Anhand der Fig. ist ersichtlich, dass die räumlich-körperlichen Abmessungen der Halterungseinrichtung 4 in der zweiten Betriebsstellung des zweiten Halterungseinrichtungselements 8 im Vergleich zu der ersten Betriebsstellung des zweiten Halterungseinrichtungselements 8 derart reduziert sind, dass ein Einbringen und/oder Ausbringen (Entfernen) der Halterungseinrichtung 4 in das Bauwerk 2 bzw. aus dem Bauwerk 2 über eine einen, z. B. überirdischen, Zugang in das Bauwerk 2 ermöglichende Zugangsöffnung 12 ermöglicht ist. Die zweite Betriebsstellung des zweiten Halterungseinrichtungselements 8 ermöglicht sonach ein einfaches und schnelles Einbringen und/oder Ausbringen (Entfernen) der Halterungseinrichtung 4 in das Bauwerk 2 bzw. aus dem Bauwerk 2 über die einen Zugang in das Bauwerk 2 ermöglichende Zugangsöffnung 12. Es ist nicht erforderlich, dass eine Person hierfür in das Bauwerk 2 steigt.

Gemäß dem in Fig. 1 gezeigten Ausführungsbeispiel ist das zweite Halterungseinrichtungselement 8, wie durch den Doppelpfeil P1 angedeutet, relativ zu dem ersten Halterungseinrichtungselement 6 schwenkbar gelagert, wobei eine erste Schwenkstellung (durchgezogen dargestellt) des zweiten Halterungseinrichtungselements 8 mit der ersten Betriebsstellung des zweiten Halterungseinrichtungselements 8 korreliert und eine zweite Schwenkstellung (gestrichelt dargestellt) des zweiten Halterungseinrichtungselements 8 mit der zweiten Betriebsstellung des zweiten Halterungseinrichtungselements 8 korreliert. In dem in Fig. 1 gezeigten Ausführungsbeispiel umfasst die Halterungseinrichtung 4 sonach eine, z. B. durch ein Schwenkgelenk gebildete oder wenigstens ein solches umfassende, Schwenkeinrichtung 13, über welche eine schwenkbare Lagerung des zweiten Halterungseinrichtungselements 8 relativ zu dem ersten Halterungseinrichtungselement 6 möglich ist. Das zweite Halterungseinrichtungselement 8 kann demnach als schwenkbar gelagerter Ausleger bezeichnet bzw. erachtet werden, welcher relativ zu dem ersten Halterungseinrichtungselement 6 verschwenkbar gelagert ist. Ersichtlich kann das zweite Halterungseinrichtungselement 8 in der ersten Schwenkstellung z. B. einen Winkel von ca. 90° relativ zu dem ersten Halterungseinrichtungselement 6 und in der zweiten Schwenkstellung einen Winkel größer oder kleiner 90°, d. h. z. B. einen Winkel von mehr als 100° oder weniger als 80°, relativ zu dem ersten Halterungseinrichtungselement 6 einnehmen. Es ist jedoch - dies gilt insbesondere (auch) für das in Fig. 2 gezeigte Ausführungsbeispiel - auch möglich, dass das zweite Halterungseinrichtungselement 8 in der ersten Schwenkstellung einen Winkel größer als 90° relativ zu dem ersten Halterungseinrichtungselement 6 einnimmt.

Fig. 1 zeigt ferner eine dem zweiten Halterungseinrichtungselement 8 zugeordnete Spanneinrichtung 17 (optional), welche zur Erzeugung bzw. Erhöhung einer das zweite Halterungseinrichtungselement 8 in der ersten Betriebsstellung gegen das Bauwerk 2 verspannenden Spannkraft eingerichtet ist. Die Wirkrichtung der Spannkraft entspricht der Wirkrichtung der über die Halterungseinrichtung 4 ausübbaren Haltekraft, sodass die Spannkraft die Haltekraft erhöht. Der erwähnte Spannverbund kann sonach zusätzlich eine gesonderte Spanneinrichtung 17 umfassen, welche die Aufnahme bzw. Freigabe von Spannkräften ermöglicht. Die Spanneinrichtung 17 kann als Spannfeder 18 ausgebildet sein, welche in Spannrichtung stauchbar und in allen weiteren Richtungen starr geführt oder gehaltert ist. Die Spannfeder 18 kann konkret als das zweite Halterungseinrichtungselement 8 zumindest abschnittsweise umgebende oder in dieses integrierte Schraubenfeder ausgebildet sein.

Das Ausführungsbeispiel gemäß Fig. 1 geht typischerweise mit einem Verspannen und/oder Verkeilen der Halterungseinrichtung 4 in dem Bauwerk 2 einher.

In Fig. 1 ist ferner eine Setzeinrichtung 19 gezeigt, welche zum Einbringen bzw. Einsetzen der Halterungseinrichtung 4 in ein Bauwerk 2 bzw. zum Ausbringen bzw. Entfernen der Halterungseinrichtung 4 aus einem Bauwerk 2 eingerichtet ist. Die Setzeinrichtung 19 ist ferner eingerichtet, das zweite Halterungseinrichtungselement 8 in die erste und/oder zweite Betriebsstellung zu überführen. Die Setzeinrichtung 19 kann derart an der Halterungseinrichtung 4, d. h. insbesondere dem zweiten Halterungseinrichtungselement 8, angreifen, dass dieses in die erste und/oder zweite Betriebsstellung bewegbar ist. Die Setzeinrichtung 19 ist typischerweise auch eingerichtet, die bzw. eine Spannkraft erhöhende Kraft in das zweite Halterungseinrichtungselement 8 einzubringen. Dies kann z. B. durch Aufbringen einer Druckkraft auf das zweite Halterungseinrichtungselement 8 erfolgen. Die Druckkraft kann z. B. über einen, insbesondere im Bereich eines freien Endes der Setzeinrichtung 19 angeordneten oder ausgebildeten, Druckbereich 29 der Setzeinrichtung 19 eingebracht werden.

Die Setzeinrichtung 19 umfasst ein einen Teil einer ersten Kopplungsschnittstelle bildendes erstes Kopplungselement 20 zur (beschädigungs- bzw. zerstörungsfrei) lösbaren Kopplung der Setzeinrichtung 19 mit der Halterungseinrichtung 4 z. B. im Rahmen von Montage- oder Demontagevorgängen der Halterungseinrichtung 4. Entsprechend umfasst die Halterungseinrichtung 4 ein einen Teil einer zu der setzeinrichtungsseitigen Kopplungsschnittstelle korrespondierenden ersten Gegenkopplungsschnittstelle bildendes erstes Gegenkopplungselement 21.

Ersichtlich kann die Setzeinrichtung 19 ferner ein einen Teil einer zweiten Kopplungsschnittstelle bildendes zweites Kopplungselement 22 zur (beschädigungs- bzw. zerstörungsfrei) lösbaren Kopplung der Setzeinrichtung 19 mit der Halterungseinrichtung 4 umfassen. Entsprechend kann die Halterungseinrichtung 4 ein einen Teil einer zu der setzeinrichtungsseitigen zweiten Kopplungsschnittstelle korrespondierenden zweiten Gegenkopplungsschnittstelle bildendes zweites Gegenkopplungselement 23 umfassen. Im Rahmen einer Montage der Halterungseinrichtung 4 wirkt die Setzeinrichtung 19 über das Kopplungselement 20 typischerweise mit dem ersten Gegenkopplungselement 21 zusammen, insbesondere um die Halterungseinrichtung 4 in das Bauwerk 2 einzubringen, und mit dem zweiten Gegenkopplungselement 23 zusammen, insbesondere um das zweite Halterungseinrichtungselement 8 durch Verschwenken relativ zu dem ersten Halterungseinrichtungselement 6 in die erste Betriebsstellung zu überführen. Im Rahmen einer Demontage der Halterungseinrichtung 4 wirkt die Setzeinrichtung 19 über das Kopplungselement 20 typischerweise mit dem zweiten Gegenkopplungselement 23 zusammen, insbesondere um das zweite Halterungseinrichtungselement 8 durch Verschwenken relativ zu dem ersten Halterungseinrichtungselement 6 in die zweite Betriebsstellung zu überführen, und mit dem zweiten Gegenkopplungselement 23 oder mit dem ersten Gegenkopplungselement 21 zusammen, insbesondere um die Halterungseinrichtung 4 aus dem Bauwerk 2 auszubringen.

In dem in Fig. 1 gezeigten Ausführungsbeispiel ist das setzeinrichtungsseitige zweite Kopplungselement 22 an einem einen Teil einer setzeinrichtungsseitigen Zugeinrichtung bildenden Zugelement 24, d. h. z. B. einem Band, einer Kette, einem Seil, etc., angeordnet bzw. ausgebildet, über welches - z. B. im mit einem halterungseinrichtungsseitigen Gegenkopplungselement 23 gekoppelten Zustand - eine auf die Halterungseinrichtung 4, d. h. insbesondere das zweite Halterungseinrichtungselement 8, wirkende Druck- oder Zugkraft ausübbar ist. Durch Ausübung einer entsprechenden Druck- oder Zugkraft kann das zweite Halterungseinrichtungselement 8 in die erste oder zweite Betriebsstellung bewegt werden. Dem Zugelement 24 kann eine Führungseinrichtung 25 zugeordnet sein, über welche das Zugelement 24 zumindest abschnittsweise in einer definierten Ausrichtung relativ zu der Setzeinrichtung 19 geführt ist.

Die Führungseinrichtung 25 kann zur Klemmung des Zugelements 24 eingerichtet sein. Der Klemmvorgang des Zugelements 24 kann von einem Benutzer eingeleitet und wieder aufgehoben werden. Denkbar ist z. B. eine Ausführung, bei der das Zugelement 24 über ein Federsystem in der Führungseinrichtung 25 geklemmt wird und die Klemmung von einem Benutzer über ein Betätigungselement (nicht gezeigt) von Hand für eine Bewegung des zweiten Halterungseinrichtungselements 8 außer Kraft gesetzt wird.

Ein jeweiliges setzeinrichtungsseitiges Kopplungselement 20, 22 kann mit einem jeweiligen halterungseinrichtungsseitigen Gegenkopplungselement 21, 23, z. B. mechanisch, d. h. insbesondere form- und/oder kraftschlüssig, und/oder magnetisch zusammenwirken. Bei einem setzeinrichtungsseitigen Kopplungselement 20, 22 kann es sich - wie in Fig. 1 gezeigt - um ein Eingriffselement, welches zum Eingriff in ein Aufnahmeelement eingerichtet ist, handeln. Bei einem halterungseinrichtungsseitigen Gegenkopplungselement 21, 23 kann es sich entsprechend um ein solches Aufnahmeelement handeln, in welches ein entsprechendes Eingriffselement eingreifen kann. Selbstverständlich ist eine umgekehrte Konfiguration ebenso denkbar. In dem in Fig. 1 gezeigten Ausführungsbeispiel handelt es sich bei einem setzeinrichtungsseitigen Kopplungselement 20, 22 beispielhaft um ein hakenartiges Hakenelement, welches zum Eingriff in ein schlaufen- oder ösenartiges Schlaufen- oder Ösenelement eingerichtet ist. Bei einem halterungseinrichtungsseitigen Gegenkopplungselement 21, 23 handelt es sich beispielhaft um ein schlaufen- oder ösenartiges Schlaufen- oder Ösenelement, in welches ein entsprechendes Hakenelement eingreifen kann.

Wenngleich in den Fig. nicht gezeigt, könnte es sich bei einem setzeinrichtungsseitigen Kopplungselement 20, 22 z. B. auch um ein rastvorsprungartiges Rastelement, welches zum rastenden Eingriff in ein rastaufnahmeartiges Gegenrastelement eingerichtet ist, handeln. Bei einem halterungseinrichtungsseitigen Gegenkopplungselement 21, 23 könnte es sich entsprechend um ein rastaufnahmeartiges Gegenrastelement handeln, in welches ein entsprechendes Rastelement rastend eingreifen kann.

Auch eine (permanent)magnetische bzw. magnetisierbare Ausführung jeweiliger Kopplungselemente 20, 22 und Gegenkopplungselemente 21, 23 wäre denkbar; bei einem setzeinrichtungsseitigen Kopplungselement 20, 22 könnte es sich demnach um ein (permanent)magnetisches oder magnetisierbares Magnetelement, welches zur magnetisch anziehenden Wechselwirkung mit einem magnetischen oder magnetisierbaren Gegenmagnetelement eingerichtet ist, handeln. Bei einem halterungseinrichtungsseitigen Gegenkopplungselement 21, 23 könnte es sich entsprechend um ein (permanent)magnetisches oder magnetisierbares Gegenmagnetelement handeln, welches mit einem entsprechenden setzeinrichtungsseitigen Magnetelement magnetisch anziehend wechselwirkt.

Die Setzeinrichtung 19 umfasst ein stangen- oder strebenartiges, gegebenenfalls, insbesondere teleskopartig, verlängerbar ausgebildetes, Setzeinrichtungselement 28, an welchem das erste und/oder zweite Kopplungselement 20, 22 angeordnet oder ausgebildet ist bzw. sind.

Fig. 1 zeigt ferner eine optionale Erfassungseinrichtung 26, welche zur Erfassung der ersten und/oder zweiten Betriebsstellung des zweiten Halterungseinrichtungselements 8 sowie zur Erzeugung einer die erste und/oder zweite Betriebsstellung des zweiten Halterungseinrichtungselements 8 beschreibenden Erfassungsinformation eingerichtet ist. Die Erfassungseinrichtung 26 kann die erste und/oder zweite Betriebsstellung des zweiten Halterungseinrichtungselements 8 z. B. über eine räumliche Ausrichtung des zweiten Halterungseinrichtungselements 8, eine auf das zweite Halterungseinrichtungselement 8 wirkende Kraft, etc. erfassen. Eine entsprechende Erfassungsinformation kann über eine der Erfassungseinrichtung 26 zugeordnete Ausgabeeinrichtung 27 an einen Benutzer ausgegeben werden. Die Ausgabe einer entsprechenden Erfassungsinformation umfasst eine tatsächliche Ausgabe akustischer und/oder optischer und/oder haptischer Signale sowie eine Übertragung einer entsprechenden Erfassungsinformation an eine externe Einrichtung (nicht gezeigt), d. h. z. B. eine mit einer entsprechenden Übertragungsschnittelle ausgestattete Datenverarbeitungseinrichtung, welche zur datenmäßigen Verarbeitung der Erfassungsinformation eingerichtet ist. Die externe Einrichtung kann z. B. ein mobiles Endgerät, wie z. B. ein Laptop, Smartphone, Smartwatch, Tablet-PC, etc., und/oder ein Netzwerkspeicher (Cloud-Speicher) sein.

Über eine entsprechende Erfassungsinformation kann ein Benutzer informiert werden, ob die von ihm, z. B. durch Betätigen der Setzeinrichtung 19 gegen die Halterungseinrichtung 4 eingebrachte, durch den Pfeil P2 angedeutete Kraft zur Erreichung der erforderlichen Haltekraft ausreicht. Durch die durch die in den Spannverbund integrierte Erfassungseinrichtung 26 erzeugte Erfassungsinformation, die signalisieren kann, wann eine gewünschte und erforderliche Kraft erreicht ist, ist ein Benutzer in der Lage, den Drück- oder Zugvorgang der Setzeinrichtung 19 entsprechend zu dosieren und gegebenenfalls sofort einzustellen. Damit kann eine Überbeanspruchung des Spannverbunds und auch die Demontage erleichtert werden.

Fig. 2 zeigt eine Prinzipdarstellung einer Vorrichtung 1 zur Halterung wenigstens eines in einem schachtartigen Bauwerk 2, d. h. z. B. einem einen Teil einer Abwasser führenden Kanalisation bildenden Abwasserkanalschacht, zu halternden Gegenstands 3 gemäß einem zweiten Ausführungsbeispiel.

Bei dem in Fig. 2 gezeigten Ausführungsbeispiel umfasst die Halterungseinrichtung 4 zwei gelenkschenkelartig ausgebildete Halterungseinrichtungselemente 6, 8, wobei die zwei Halterungseinrichtungselemente 6, 8 über eine diese gelenkig koppelnde Gelenkeinrichtung 15, wie durch den Doppelpfeil P3 angedeutet, schwenkbar relativ zueinander gelagert sind, wobei eine erste Schwenkstellung der Halterungseinrichtungselemente 6, 8 mit der ersten Betriebsstellung des zweiten Halterungseinrichtungselements 8 korreliert und eine zweite Schwenkstellung der Halterungseinrichtungselemente 6, 8 mit der zweiten Betriebsstellung des zweiten Halterungseinrichtungselements 8 korreliert. Die Halterungseinrichtung 4 umfasst sonach eine durch ein Kniehebelgelenk gebildete Gelenkeinrichtung 15, über welche eine schwenkbare Lagerung der gelenkig gekoppelten Halterungseinrichtungselemente 6, 8 relativ zueinander möglich ist. Die Halterungseinrichtungselemente 6, 8 können demnach als schwenkbar gelagerte Ausleger bezeichnet bzw. erachtet werden, welche relativ zueinander verschwenkbar gelagert sind. Ersichtlich ist der erste Halterungsabschnitt 5 an dem ersten Halterungseinrichtungselement 6 und der zweite Halterungsabschnitt 7 an dem zweiten Halterungseinrichtungselement 8 angeordnet bzw. ausgebildet. Die beiden Halterungseinrichtungselemente 6, 8 sind typischerweise starr ausgeführt, was ein stabiles Verkeilen der Halterungseinrichtung 4 in dem Bauwerk 2 ermöglicht.

Das Ausführungsbeispiel gemäß Fig. 2 geht typischerweise mit einem Verkeilen der Halterungseinrichtung 4 in dem Bauwerk 2 einher.

Die jedoch auch in diesem Ausführungsbeispiel denkbare Spanneinrichtung 17 sorgt dafür, dass in der ersten Betriebsstellung des zweiten Halterungseinrichtungselements 8 der Halterungsabschnitt 7 an das Bauwerk 2 gedrückt und die erforderliche Haltekraft zum Fixieren der Halterungseinrichtung 4 erreicht wird. Insoweit kann das Ausführungsbeispiel auch mit einem Verspannen der Halterungseinrichtung 4 in dem Bauwerk 2 einhergehen. Analoges gilt für den denkbaren alternativen oder ergänzenden Fall einer entsprechenden dem ersten Halterungseinrichtungselement 6 zugeordneten Spanneinrichtung 17.

Fig. 3 zeigt eine Prinzipdarstellung einer Vorrichtung 1 zur Halterung wenigstens eines in einem schachtartigen Bauwerk 2, d. h. z. B. einem einen Teil einer Abwasser führenden Kanalisation bildenden Abwasserkanalschacht, zu halternden Gegenstands 3 gemäß einem dritten Ausführungsbeispiel.

Bei dem in Fig. 3 gezeigten Ausführungsbeispiel ist das zweite Halterungseinrichtungselement 8 segmentiert ausgebildet. Das zweite Halterungseinrichtungselement 8 umfasst sonach zwei, insbesondere teleskopartig angeordnete oder ausgebildete, Halterungseinrichtungselementsegmente 8a, 8b, wobei ein zweites Halterungseinrichtungselementsegment 8b relativ zu einem ersten Halterungseinrichtungselementsegment 8a, insbesondere teleskopartig, zwischen einer ausgefahrenen Stellung und einer eingefahrenen Stellung, wie durch den Doppelpfeil P4 angedeutet, bewegbar gelagert ist, wobei die ausgefahrene Stellung mit der ersten Betriebsstellung des zweiten Halterungseinrichtungselements 8 korreliert und die eingefahrene Stellung mit der zweiten Betriebsstellung des zweiten Halterungseinrichtungselements 8 korreliert. Die Halterungseinrichtung 4 umfasst sonach eine durch eine Teleskopeinrichtung gebildete Verlängerungseinrichtung 14, über welche eine Verlängerung und/oder Verkürzung des zweiten Halterungseinrichtungselements 8 über eine lineare Relativbewegung des zweiten Halterungseinrichtungselementsegments 8b relativ zu dem ersten Halterungseinrichtungselementsegments 8a, d. h. ein Aus- und/oder Einfahren des zweiten Halterungseinrichtungselementsegments 8b, möglich ist. Das zweite Halterungseinrichtungselementsegment 8b kann demnach als teleskopartig gelagerter Ausleger bezeichnet bzw. erachtet werden, welcher relativ zu dem ersten Halterungseinrichtungselementsegment 8a bewegbar gelagert ist. Ersichtlich ist der zweite Halterungsabschnitt 7 an dem zweiten Halterungseinrichtungselementsegment 8b angeordnet bzw. ausgebildet.

Das Ausführungsbeispiel gemäß Fig. 3 geht typischerweise mit einem Verspannen der Halterungseinrichtung 4 in dem Bauwerk 2 einher.

Wie erwähnt, ist der Gegenstand 3 - dies gilt für alle Ausführungsbeispiele - an der Halterungseinrichtung 4, d. h. an dem ersten und/oder zweiten Halterungseinrichtungselement 6, 8, befestigbar bzw. befestigt. Die Befestigung des Gegenstands 3 an dem ersten und/oder zweiten Halterungseinrichtungselement 6, 8 ist typischerweise beschädigungs- bzw. zerstörungsfrei lösbar. An dem ersten und/oder zweiten Halterungseinrichtungselement 6, 8 ist bzw. sind hierfür Befestigungsschnittstellen 16 angeordnet bzw. ausgebildet, welche zur Befestigung eines zu halternden Gegenstands 3 eingerichtet sind. Eine entsprechende Befestigungsschnittstelle 16 kann eine mechanische, d. h. insbesondere eine kraft- und/oder formschlüssige, Befestigung des Gegenstands 3 an einem jeweiligen Halterungseinrichtungselement 6, 8 ermöglichen, wozu die Befestigungsschnittstelle 16 wenigstens ein Befestigungselement (nicht näher gezeigt), d. h. z. B. ein Kraft- und/oder Formschlusselement, umfasst, welches eingerichtet ist, unter Ausbildung einer Befestigung des Gegenstands 3 an dem jeweiligen Halterungseinrichtungselement 6, 8 mit einem korrespondieren Befestigungselement (nicht näher gezeigt), d. h. z. B. einem korrespondierenden Kraft- und/oder Formschlusselement, an dem Gegenstand 3 zusammenzuwirken. Bei entsprechenden Kraft- und/oder Formschlusselementen kann es sich z. B. um Schraubelemente, d. h. z. B. Schraubbolzen und Schraubaufnahmen, und/oder Rastelemente, d. h. z. B. Rastvorsprünge und Rastaufnahmen, handeln.

Für alle Ausführungsbeispiele gilt, dass die Vorrichtung 1 eine dem zweiten Halterungseinrichtungselement 8 bzw. dem zweiten Halterungseinrichtungselementsegment 8b zugeordnete Sicherungseinrichtung 30 umfassen kann, welche eingerichtet ist, das zweite Halterungseinrichtungselement 8 bzw. das zweite Halterungseinrichtungselementsegment 8b in der zweiten Betriebsstellung bzw. in einer mit der zweiten Betriebsstellung korrespondierenden Ausrichtung zu sichern. Die exemplarisch in Fig. 3 und dort rein beispielhaft im Bereich der Verlängerungseinrichtung 14 angedeutete Sicherungseinrichtung 30 kann hierzu wenigstens ein, z. B. an dem ersten Halterungseinrichtungselement 6 bzw. dem ersten Halterungseinrichtungselementsegment 8a angeordnetes oder ausgebildetes Sicherungselement, d. h. z. B. ein Kraft- und/oder Formschlusselement, umfassen, welches eingerichtet ist, unter Ausbildung einer Sicherung des zweiten Halterungseinrichtungselements 8 bzw. des zweiten Halterungseinrichtungselementsegments 8b in der zweiten Betriebsstellung mit einem korrespondieren Befestigungselement, d. h. z. B. einem korrespondierenden Kraft- und/oder Formschlusselement, an dem zweiten Halterungseinrichtungselement 8 bzw. dem zweiten Halterungseinrichtungselementsegment 8b zusammenzuwirken. Bei entsprechenden Kraft- und/oder Formschlusselementen kann es sich z. B. um Rastelemente, d. h. z. B. Rastvorsprünge und Rastaufnahmen, handeln.

Für alle Ausführungsbeispiele gilt ferner, dass der erste und/oder der zweite Halterungsabschnitt 5, 7 mit einer die bzw. eine die Halterungseinrichtung 4 in dem Bauwerk 2 halternde Haltekraft erhöhenden Oberfläche bzw. (dreidimensionalen) Oberflächenstrukturierung versehen sein kann. Eine entsprechende Oberfläche bzw. Oberflächenstrukturierung kann z. B. durch einen Reibbelag bzw. eine Verzahnung im Bereich des das Bauwerk 2 kontaktierenden Kontaktbereichs 9, 10 eines jeweiligen Halterungsabschnitts 5, 7 gebildet sein.

Weiter gilt für alle Ausführungsbeispiele, dass das zweite Halterungseinrichtungselement 8 wenigstens eine eine Durchgriffsmöglichkeit für einen vermittels der Halterungseinrichtung 4 zu halternden Gegenstand 3 und/oder für ein Betätigungselement, insbesondere ein Betätigungswerkzeug, zur Betätigung einer Funktionalität eines vermittels der Halterungseinrichtung 4 gehalterten Gegenstands 3 schaffende, durch den Pfeil P5 schematisch angedeutete Öffnung (Durchgriffsöffnung) aufweisen kann. Eine entsprechende Öffnung kann z. B. durch eine Ausnehmung in dem zweiten Halterungseinrichtungselement 8 oder eine zumindest abschnittsweise segmentierte, z. B. ring-, rauten- oder V-förmige, Ausbildung des zweiten Halterungseinrichtungselements 8, wobei eine eine entsprechende Durchgangsmöglichkeit schaffende Öffnung durch einen sich zwischen jeweiligen Halterungseinrichtungselementsegmenten erstreckenden, z. B. ring-, rauten- oder V-förmigen, Innenraum gebildet sein kann.

Für alle Ausführungsbeispiele gilt ferner, dass, sofern das zweite Halterungseinrichtungselement 8, wie beispielhaft in Fig. 3 gezeigt, ein erstes und ein zweites Halterungseinrichtungselementsegment 8a, 8b umfasst, das bzw. ein zweite(s) Halterungseinrichtungselementsegment 8b stufenlos relativ zu dem bzw. einem ersten Halterungseinrichtungselementsegment 8a bewegbar gelagert sein kann. Das zweite Halterungseinrichtungselementsegment 8b kann sonach z. B. teleskopartig ausziehbar sein. Das zweite Halterungseinrichtungselement 8 kann derart durch entsprechende Bewegung des zweiten Halterungseinrichtungselementsegments 8b relativ zu dem ersten Halterungseinrichtungselementsegment 8a beliebig in seiner Länge variiert werden. Das zweite Halterungseinrichtungselement 8 kann derart an verschiedene Schachtabmessungen, d. h. insbesondere an verschiedene Schachtinnendurchmesserabmessungen, anpassbar sein.

Dem zweiten Halterungseinrichtungselement 8 kann dabei eine Arretiereinrichtung (nicht gezeigt) zuordenbar oder zugeordnet sein, welche eingerichtet ist, das relativ zu dem ersten Halterungseinrichtungselementsegment 8a bewegbar gelagerte zweite Halterungseinrichtungselementsegment 8b in beliebigen Positionen relativ zu dem ersten Halterungseinrichtungselementsegment 8a zu arretieren und somit zu fixieren. Eine entsprechende Arretiereinrichtung ist sonach im Allgemeinen zur Erzeugung einer das zweite Halterungseinrichtungselementsegment 8b in einer beliebigen Position arretierenden Arretierkraft eingerichtet. Eine entsprechende Arretiereinrichtung kann z. B. als Klemm- oder Spanneinrichtung ausgebildet sein bzw. wenigstens eine solche umfassen. Eine entsprechende Klemm- oder Spanneinrichtung kann konkret z. B. als Klemm- oder Spannschelle oder als Klemm- oder Spannmanschette ausgebildet sein bzw. wenigstens eine solche umfassen.

Insgesamt kann diese stufenlos arretierbare Lösung in den Setzvorgang bzw. in den Bewegungsablauf des Setzvorgangs integriert werden. Bei einem Setzvorgang kann die Länge der Halterungseinrichtungselemente 6, 8, d. h. insbesondere die Länge des zweiten Halterungseinrichtungselements 8, bis kurz vor dem Erreichen der ersten Betriebsstellung, (zunächst) ohne Arretierung, z. B. unter Zuhilfenahme einer Libelle, auf das gewünschte Maß eingestellt werden, ohne die Schachtabmessungen zu kennen oder zu messen. Vor dem Erreichen der ersten Betriebsstellung werden die Halterungseinrichtungselementsegmente 8a, 8b und so die gesamte Vorrichtung zu einem starren Teil, um so bzw. dann die erforderlichen Kräfte aufbauen zu können.

Ein weiteres Beispiel einer entsprechenden Erfassungseinrichtung kann eine in einer hierfür vorgesehenen an dem zweiten Halterungseinrichtungselement 8 befestigbaren bzw. befestigten Aufnahmeeinrichtung (nicht gezeigt) angeordnete oder ausgebildete Libelle (nicht gezeigt) sein, anhand welcher eine Ausrichtung des zweiten Halterungseinrichtungselements 8 relativ zu dem ersten Halterungseinrichtungselement 6 erkennbar ist. Die Aufnahmeeinrichtung kann einen Aufnahme- bzw. Lagerungskörper mit einer bezüglich einer horizontalen Referenzebene um einen bestimmten Winkel, d. h. z. B. einen Winkel von 10°, geneigt ausgerichteten Aufnahmekörper- bzw. Lagerkörperabschnitt aufweisen. Der bestimmte Winkel resultiert typischerweise aus einer bestimmungsgemäßen winkligen Ausrichtung des zweiten Halterungseinrichtungselements 8, insbesondere relativ zu dem ersten Halterungseinrichtungselement 6, in der ersten Betriebsstellung. In dem Aufnahmekörper- bzw. Lagerkörperabschnitt kann eine, z. B. durch eine Ausnehmung realisierte, Aufnahme- bzw. Lagerungsmöglichkeit für die Libelle ausgebildet sein. Die Libelle ist sonach ebenso um den bestimmten Winkel geneigt bezüglich der horizontalen Referenzebene ausgerichtet. Die in der Libelle befindliche Gasblase ist sonach dann zentriert, wenn sich das zweite Halterungseinrichtungselement 8 in der bestimmungsgemäßen winkligen Ausrichtung in der ersten Betriebsstellung befindet. Derart ist eine einfache, jedoch äußerst zuverlässige Erfassung der ersten Betriebsstellung möglich.

Mit den in den Fig. gezeigten Vorrichtungen 1 lässt sich ein Verfahren zum Einbringen in einem Bauwerk 2 implementieren. Das Verfahren umfasst die folgenden Schritte: Einbringen einer Halterungseinrichtung 4 in Bauwerk 2, wobei das zweite Halterungseinrichtungselement 8 der Halterungseinrichtung 4 in die zweite Betriebsstellung bewegt ist, Überführen des zweiten Halterungseinrichtungselements 8 von der zweiten Betriebsstellung in die erste Betriebsstellung unter Ausbildung einer Halterung der Halterungseinrichtung 4 in dem Bauwerk 2. An der Halterungseinrichtung 4 kann bereits ein zu halternder Gegenstand 3 gehaltert sein oder im Nachhinein gehaltert werden.

Das Verfahren wird mit der Setzeinrichtung 19 durchgeführt bzw. die Durchführung des Verfahrens mit der Setzeinrichtung 19 erleichtert. Die Setzeinrichtung 19 wird insbesondere dazu verwendet, die Halterungseinrichtung 4 in das Bauwerk 2 einzubringen sowie das zweite Halterungseinrichtungselement 8, z. B. durch Aufbringen einer entsprechenden Druck- oder Zugkraft auf das zweite Halterungseinrichtungselement 8, von der zweiten Betriebsstellung in die erste Betriebsstellung zu überführen und in dem Bauwerk 2 zu verspannen bzw. zu verkeilen. Weiterhin lässt sich mit den in den Fig. gezeigten Vorrichtungen 1 ein Verfahren zum Ausbringen (Entfernen) aus einem Bauwerk 2 implementieren. Das Verfahren umfasst die folgenden Schritte: Überführen des zweiten Halterungseinrichtungselements 8 von der ersten Betriebsstellung in die zweite Betriebsstellung unter Auflösung einer Halterung der Halterungseinrichtung 4 in dem Bauwerk 2, Ausbringen der Halterungseinrichtung 4 aus dem Bauwerk 2, wobei das zweite Halterungseinrichtungselement 8 der Halterungseinrichtung 4 in die zweite Betriebsstellung bewegt ist. An der Halterungseinrichtung 4 kann ein zu halternder Gegenstand 3 gehaltert sein oder im Vorhinein entfernt werden.

Das Verfahren wird mit der Setzeinrichtung 19 durchgeführt bzw. die Durchführung des Verfahrens mit der Setzeinrichtung 19 erleichtert. Die Setzeinrichtung 19 wird dazu verwendet, das zweite Halterungseinrichtungselement 8, z. B. durch Aufbringen einer entsprechenden Druckkraft auf das zweite Halterungseinrichtungselement 8, von der ersten Betriebsstellung in die zweite Betriebsstellung zu überführen, sowie die Halterungseinrichtung 4 aus dem Bauwerk 2 auszubringen.

## Patentansprüche

1. Vorrichtung (1) zur Halterung wenigstens einer in einem schachtartigen Bauwerk (2) zu halternden Vorrichtung zur Halterung eines Köders oder wenigstens einer ein oder mehrere Erfassungselemente umfassenden Erfassungseinrichtung, umfassend:
- eine Halterungseinrichtung (4) zur Halterung wenigstens einer in einem schachtartigen Bauwerk (2) zu halternden Vorrichtung zur Halterung eines Köders oder wenigstens einer ein oder mehrere Erfassungselemente umfassenden Erfassungseinrichtung, umfassend ein wenigstens einen ersten Halterungsabschnitt (5) zur Halterung der Halterungseinrichtung (4) an einem schachtartigen Bauwerk (2) umfassendes erstes Halterungseinrichtungselement (6) und ein wenigstens einen zweiten Halterungsabschnitt (7) zur Halterung der Halterungseinrichtung (4) an einem schachtartigen Bauwerk (2) umfassendes zweites Halterungseinrichtungselement (8), wobei
wenigstens das zweite Halterungseinrichtungselement (8) zwischen einer ersten Betriebsstellung, in welcher die Halterungseinrichtung (4) über das zweite Halterungseinrichtungselement (8) an einem schachtartigen Bauwerk (2) halterbar oder gehaltert ist, und einer zweiten Betriebsstellung, in welcher die Halterungseinrichtung (4) nicht über das zweite Halterungseinrichtungselement (8) an einem schachtartigen Bauwerk (2) halterbar oder gehaltert ist, bewegbar gelagert ist; wobei
das zweite Halterungseinrichtungselement (8), insbesondere relativ zu dem ersten Halterungseinrichtungselement (6), schwenkbar gelagert ist, wobei eine erste Schwenkstellung des zweiten Halterungseinrichtungselements (8) mit der ersten Betriebsstellung des zweiten Halterungseinrichtungselements (8) korreliert und eine zweite Schwenkstellung des zweiten Halterungseinrichtungselements (8) mit der zweiten Betriebsstellung des zweiten Halterungseinrichtungselements (8) korreliert,
- wenigstens eine an dem ersten und/oder zweiten Halterungseinrichtungselement (6, 8) angeordnete oder ausgebildete Befestigungsschnittstelle (16) zur, insbesondere lösbaren, Befestigung wenigstens einer in einem schachtartigen Bauwerk (2) zu halternden Vorrichtung zur Halterung eines Köders oder wenigstens einer ein oder mehrere Erfassungselemente umfassenden Erfassungseinrichtung, und
- eine
der Halterungseinrichtung (4) zuordenbare oder zugeordnete Setzeinrichtung (19) zum Einbringen der Halterungseinrichtung (4) in ein schachtartiges Bauwerk (2) im Rahmen von Montagevorgängen der Halterungseinrichtung (4), wobei
die Setzeinrichtung (19) wenigstens ein einen Teil einer ersten Kopplungsschnittstelle bildendes erstes Kopplungselement (20) zur lösbaren Kopplung der Setzeinrichtung (19) mit der Halterungseinrichtung (4) umfasst und die Halterungseinrichtung (4) wenigstens ein einen Teil einer zu der setzeinrichtungsseitigen ersten Kopplungsschnittstelle korrespondierenden ersten Gegenkopplungsschnittstelle bildendes erstes Gegenkopplungselement (21) umfasst,
**dadurch gekennzeichnet, dass**
das erste Kopplungselement (20) der Setzeinrichtung (19) an einem einen Teil einer setzeinrichtungsseitigen Druckeinrichtung bildenden Druckelement angeordnet oder ausgebildet ist, über welches eine auf das zweite Halterungseinrichtungselement (8) wirkende Druckkraft ausübbar ist, über welche das zweite Halterungselement (8) in die erste Betriebsstellung bewegt werden kann, wobei
die Setzeinrichtung (19) ein stangen- oder strebenartiges, gegebenenfalls verlängerbar ausgebildetes, Setzeinrichtungselement (28) umfasst, an welchem das erste Kopplungselement (20) angeordnet oder ausgebildet ist.

2. Vorrichtung nach Anspruch 1, **dadurch gekennzeichnet, dass** das zweite Halterungseinrichtungselement (8) wenigstens zwei, insbesondere gelenkschenkelartig ausgebildete, Halterungseinrichtungselemente (6, 8) umfasst, wobei die wenigstens zwei Halterungseinrichtungselemente (6, 8), insbesondere über wenigstens eine diese gelenkig koppelnde Gelenkeinrichtung (15), schwenkbar relativ zueinander gelagert sind, wobei eine erste Schwenkstellung der Halterungseinrichtungselemente (6, 8) mit der ersten Betriebsstellung des zweiten Halterungseinrichtungselements (8) korreliert und eine zweite Schwenkstellung der Halterungseinrichtungselemente (6, 8) mit der zweiten Betriebsstellung des zweiten Halterungseinrichtungselements (8) korreliert.

3. Vorrichtung nach Anspruch 1, **dadurch gekennzeichnet, dass** das zweite Halterungseinrichtungselement (8) wenigstens zwei, insbesondere teleskopartig angeordnete, Halterungseinrichtungselementsegmente (8a, 8b) umfasst, wobei ein Halterungseinrichtungselementsegment (8b) relativ zu wenigstens einem weiteren Halterungseinrichtungselementsegment (8a), insbesondere teleskopartig, zwischen einer ausgefahrenen Stellung und einer eingefahrenen Stellung bewegbar gelagert ist, wobei die ausgefahrene Stellung mit der ersten Betriebsstellung des zweiten Halterungseinrichtungselements (8) korreliert und die eingefahrene Stellung mit der zweiten Betriebsstellung des zweiten Halterungseinrichtungselements (8) korreliert.

4. Vorrichtung nach Anspruch 1 oder 3, **dadurch gekennzeichnet, dass** das zweite Halterungseinrichtungselement (8) wenigstens zwei bzw. die wenigstens zwei insbesondere teleskopartig angeordnete, Halterungseinrichtungselementsegmente (8a, 8b) umfasst, wobei ein bzw. das Halterungseinrichtungselementsegment (8b) relativ zu wenigstens einem weiteren bzw. dem wenigstens einen weiteren Halterungseinrichtungselementsegment (8a), insbesondere teleskopartig, stufenlos bewegbar gelagert ist.

5. Vorrichtung nach Anspruch 3 oder 4, **gekennzeichnet durch** wenigstens eine dem zweiten Halterungseinrichtungselement (8) zuordenbare oder zugeordnete Arretiereinrichtung, welche eingerichtet ist, ein bzw. das relativ zu wenigstens einem weiteren Halterungseinrichtungselementsegment (8b) bewegbar gelagerte Halterungseinrichtungselementsegment (8a) in beliebigen Positionen relativ zu dem wenigstens einen weiteren Halterungseinrichtungselementsegment (8b) zu arretieren.

6. Vorrichtung nach einem der vorhergehenden Ansprüche, **dadurch gekennzeichnet, dass** der erste und/oder der zweite Halterungsabschnitt (5, 7) mit einer die bzw. eine die Halterungseinrichtung (4) in dem schachtartigen Bauwerk (2) halternde Haltekraft erhöhenden, insbesondere dreidimensionalen, Oberflächenstrukturierung versehen ist.

7. Vorrichtung nach einem der vorhergehenden Ansprüche, **gekennzeichnet durch** wenigstens eine dem zweiten Halterungseinrichtungselement (8) zugeordnete Spanneinrichtung (17), welche zur Erzeugung einer das zweite Halterungseinrichtungselement (8) in der ersten Betriebsstellung gegen ein schachtartiges Bauwerk (2) verspannenden Spannkraft eingerichtet ist.

8. Vorrichtung nach einem der vorhergehenden Ansprüche, **dadurch gekennzeichnet, dass** das erste und/oder das zweite Halterungseinrichtungselement (6, 8) stangen- bzw. strebenartig ausgebildet sind.

9. Vorrichtung nach einem der vorhergehenden Ansprüche, **gekennzeichnet durch** eine Erfassungseinrichtung (26), welche zur Erfassung der ersten und/oder zweiten Betriebsstellung des zweiten Halterungseinrichtungselements (8) sowie zur Erzeugung einer die erste und/oder zweite Betriebsstellung des zweiten Halterungseinrichtungselements (8) beschreibenden Erfassungsinformation eingerichtet ist.

10. Verfahren zum Einbringen einer Vorrichtung (1) nach einem der Ansprüche 1 bis 9 in ein schachtartiges Bauwerk (2), umfassend die Schritte:
- Einbringen der Halterungseinrichtung (4) in ein schachtartiges Bauwerk (2) vermittels der Setzeinrichtung (19), wobei das zweite Halterungseinrichtungselement (8) der Halterungseinrichtung (4) in die zweite Betriebsstellung bewegt ist,
- Überführen des zweiten Halterungseinrichtungselements (8) von der zweiten Betriebsstellung in die erste Betriebsstellung vermittels der Setzeinrichtung (19) unter Ausbildung einer Halterung der Halterungseinrichtung (4) in dem schachtartigen Bauwerk (2).

11. Verfahren zum Ausbringen einer Vorrichtung (1) nach einem der Ansprüche 1 - 9 aus einem schachtartigen Bauwerk (2), umfassend die Schritte:
- Überführen des zweiten Halterungseinrichtungselements (8) von der ersten Betriebsstellung in die zweite Betriebsstellung vermittels der Setzeinrichtung (19) unter Auflösung einer Halterung der Halterungseinrichtung (4) in dem schachtartigen Bauwerk (2),
- Ausbringen der Halterungseinrichtung (4) aus dem schachtartigen Bauwerk (2) vermittels der Setzeinrichtung (19), wobei das zweite Halterungseinrichtungselement (8) der Halterungseinrichtung (4) in die zweite Betriebsstellung bewegt ist.

## Claims

1. Device (1) for holding at least one device to be held in a shaft-like structure (2) for holding a bait or at least one or more detection elements comprising detection means, comprising:
- a holder (4) for holding at least one device to be held in a shaft-like structure (2) for holding a bait or at least one or more detection elements comprising a detection device comprising at least one first holder section (5) for holding the holder (4) to a shaft-like structure (2) comprising first holder element (6) and at least one second holder section (7) for holding the holder (4) to a shaft-like structure (2) comprising second holder element (8), wherein
at least the second retaining device element (8) is movable between a first operating position in which the retaining device (4) is held or held by means of the second retaining device element (8) on a shaft-like structure (2) and a second operating position in which the retaining device (4) is not held or held by means of the second retaining device element (8) on a shaft-like structure (2); where:
the second mounting device element (8), in particular relative to the first mounting device element (6), is pivotally mounted, wherein a first pivot position of the second mounting device element (8) correlates with the first operating position of the second mounting device element (8) and a second pivot position of the second mounting device element (8) correlates with the second operating position of the second mounting device element (8),
- at least one at the first and / or second mounting device element (6, 8) arranged or formed fastening interface (16) for, in particular detachable, fastening at least one to be held in a shaft-like structure (2) device for holding a bait or at least one or more detection elements comprising detection device, and
a setting device (19) which can be assigned or assigned to the mounting device (4) for inserting the mounting device (4) into a shaft-like structure (2) in the context of mounting operations of the mounting device (4), wherein
The setting device (19) comprises at least one part of a first coupling interface forming first coupling element (20) for detachable coupling of the setting device (19) with the mounting device (4) and the mounting device (4) comprises at least one part of a corresponding to the setting device-side first coupling interface first countercoupling interface forming first countercoupling element (21), **characterized in that**
the first coupling element (20) of the setting device (19) is arranged or formed on a part of a setting device-side pressure device forming pressure element, via which a compressive force acting on the second holding device element (8) is exercisable, via which the second holding element (8) can be moved to the first operating position, wherein
The setting device (19) comprises a rod- or strut-like, optionally extendable formed, setting device element (28) on which the first coupling element (20) is arranged or formed.

2. Device according to claim 1, **characterized in that** the second retaining device element (8) comprises at least two, in particular articulated leg-like, retaining device elements (6, 8), wherein the at least two retaining device elements (6, 8), in particular via at least one of these articulated coupling joint means (15), are pivotally mounted relative to each other, wherein a first pivoting position of the retaining device elements (6, 8) correlates with the first operating position of the second retaining device element (8) and a second pivoting position of the retaining device elements (6, 8) correlates with the second operating position of the second retaining device element (8).

3. Device according to claim 1, **characterized in that** the second retaining device element (8) comprises at least two, in particular telescopically arranged, retaining device element segments (8a, 8b), wherein a retaining device element segment (8b) is movably mounted relative to at least one further retaining device element segment (8a), in particular telescopically, between an extended position and a retracted position, wherein the extended position correlates with the first operating position of the second retaining device element (8) and correlates the retracted position with the second operating position of the second retaining device element (8).

4. Device according to claim 1 or 3, **characterized in that** the second mounting device element (8) comprises at least two or the at least two, in particular telescopically arranged, mounting device element segments (8a, 8b), wherein one or the mounting device element segment (8b) is mounted relative to at least one further or the at least one further mounting device element segment (8a), in particular telescopically, continuously movable.

5. Device according to claim 3 or 4, **characterized by** at least one of the second mounting device element (8) assignable or associated locking device, which is arranged to lock one or the relative to at least one further mounting device element segment (8b) movably mounted mounting device element segment (8a) in any positions relative to the at least one further mounting device element segment (8b).

6. Device according to one of the preceding claims, **characterized in that** the first and / or the second holding portion (5, 7) is provided with a holding force increasing the or a holding device (4) in the shaft-like structure (2), in particular three-dimensional, surface structuring.

7. Device according to one of the preceding claims, **characterized by** at least one clamping device (17) associated with the second mounting device element (8), which is provided for generating a clamping force of the second mounting device element (8) in the first operating position against a shaft-like structure (2).

8. Device according to one of the preceding claims, **characterized in that** the first and / or the second mounting device element (6, 8) are formed rod-like or strut-like.

9. Device according to one of the preceding claims, **characterized by** a detection device (26), which is designed for detecting the first and / or second operating position of the second mounting device element (8) and for generating the first and / or second operating position of the second mounting device element (8) descriptive detection information.

10. Method for introducing a device (1) according to any one of claims 1 to 9 into a shaft-like structure (2), comprising the steps:
- insertion of the mounting device (4) into a shaft-like structure (2) by means of the setting device (19), wherein the second mounting device element (8) of the mounting device (4) is moved to the second operating position,
- Transfer of the second mounting device element (8) from the second operating position to the first operating position by means of the setting device (19) forming a bracket of the mounting device (4) in the shaft-like structure (2).

11. Method for deploying a device (1) according to any one of claims 1 to 9 from a shaft-like structure (2), comprising the steps:
- transfer of the second mounting device element (8) from the first operating position to the second operating position by means of the setting device (19) with dissolution of a bracket of the mounting device (4) in the shaft-like structure (2),
- Removal of the retaining device (4) from the shaft-like structure (2) by means of the setting device (19), wherein the second retaining device element (8) of the retaining device (4) is moved to the second operating position.

## Revendications

1. Dispositif (1) de fixation d'au moins un dispositif de fixation d'appât à fixer dans un ouvrage d'art ressemblant à un puits (2) ou d'au moins un dispositif de détection comprenant un ou plusieurs éléments de détection, comprenant:
- un dispositif de retenue (4) pour la fixation d'au moins un dispositif de fixation d'appât (2) à monter dans une structure ressemblant à un puits ou d'au moins un dispositif de détection comprenant un ou plusieurs éléments de détection, comprenant au moins un premier élément de fixation (5) pour la fixation du dispositif de fixation (4) à une structure ressemblant à un puits (2) premier élément de fixation (6) et au moins un deuxième élément de fixation (7) pour la fixation du dispositif de fixation (4) à une structure ressemblant à un puits (2) deuxième élément de fixation (8), étant entendu que:
au moins le deuxième élément du dispositif de fixation (8) est entreposé de manière mobile entre une première position de service dans laquelle le dispositif de fixation (4) peut être maintenu ou contenu par le deuxième élément du dispositif de fixation (8) sur un ouvrage semblable à un puits (2) et une deuxième position de service dans laquelle le dispositif de fixation (4) n'est pas maintenu ou contenu par le deuxième élément du dispositif de fixation (8) sur un ouvrage semblable à un puits (2); dans laquelle:
le deuxième élément de montage (8), en particulier par rapport au premier élément de montage (6), est pivotant, une première position d'inclinaison du deuxième élément de montage (8) étant corrélée à la première position de fonctionnement du deuxième élément de montage (8) et une seconde position d'inclinaison du deuxième élément de montage (8) étant corrélée à la deuxième position de fonctionnement du deuxième élément de montage (8);
- au moins une interface de fixation (16) disposée ou formée sur les premier et/ou deuxième éléments de fixation (6, 8) en vue de la fixation, notamment détachable, d'au moins un dispositif de fixation d'appât à fixer dans un ouvrage d'art ressemblant à un puits (2) ou d'au moins un dispositif de détection comprenant un ou plusieurs éléments de détection, et
un dispositif de réglage (19) attribuable ou rattaché au dispositif de fixation (4), destiné à introduire le dispositif de fixation (4) dans une structure ressemblant à un puits (2) dans le cadre des opérations de montage du dispositif de fixation (4), dans lequel:
le dispositif d'attelage (19) comprend au moins un premier élément d'attelage (20) faisant partie d'une première interface d'attelage permettant de coupler le dispositif d'attelage (19) au dispositif de retenue (4) et le dispositif de retenue (4) comprend au moins un élément d'un premier élément d'attelage (21) faisant partie d'une première interface d'attelage correspondant à la première interface d'attelage du côté du dispositif d'attelage, **caractérisé en ce que**:
le premier élément d'accouplement (20) du dispositif de réglage (19) est placé ou formé sur un élément de pression faisant partie d'un dispositif de réglage du côté du dispositif de réglage, par lequel une force de compression agissant sur le deuxième élément de fixation (8) peut être exercée, par laquelle le deuxième élément de réglage (8) peut être déplacé vers la première position de fonctionnement, étant entendu que:
le dispositif d'attelage (19) comporte un élément de dispositif d'attelage (28) en forme de tige ou d'axe, éventuellement extensible, sur lequel le premier élément d'attelage (20) est disposé ou formé.

2. Dispositif selon la revendication 1, **caractérisé en ce que** le deuxième élément de fixation (8) comprend au moins deux éléments de fixation (6, 8), en particulier formés comme des cuisses articulées, dans lesquels au moins deux éléments de fixation (6, 8), en particulier au-dessus d'au moins un élément de fixation articulé (15), sont articulés l'un par rapport à l'autre, dans lequel une première position d'inclinaison des éléments de fixation (6, 8) est corrélée avec la première position de fonctionnement du deuxième élément de fixation (8) et une seconde position d'inclinaison des éléments de fixation (6, 8) est corrélée avec la deuxième position de fonctionnement du deuxième élément de fixation (8).

3. Dispositif selon la revendication 1, **caractérisé en ce que** le deuxième élément de fixation (8) comprend au moins deux segments d'éléments de fixation (8a, 8b) disposés en particulier de manière télescopique, dans lesquels un segment d'éléments de fixation (8b) est mobile par rapport à au moins un autre segment d'éléments de fixation (8a), en particulier de manière télescopique, entre une position déployée et une position rétractée, dans lequel la position déployée est en corrélation avec la première position de fonctionnement du deuxième élément de fixation (8) et la position rétractée est en corrélation avec la deuxième position de fonctionnement du deuxième élément de fixation (8).

4. Dispositif selon la revendication 1 ou 3, **caractérisé en ce que** le deuxième élément de fixation (8) comprend au moins deux ou au moins deux segments d'éléments de fixation (8a, 8b) disposés en particulier de manière télescopique, dans lesquels un ou plusieurs segments d'éléments de fixation (8b) sont stockés en continu par rapport à au moins un autre ou au moins un autre segment d'éléments de fixation (8a), en particulier de manière télescopique.

5. Dispositif selon la revendication 3 ou 4, **caractérisé par** au moins un dispositif d'arrêt attribuable ou assigné au deuxième élément de montage (8), qui est configuré pour verrouiller un ou plusieurs segments d'élément de montage (8a) mobiles par rapport à au moins un autre segment d'élément de montage (8b) dans n'importe quelle position par rapport à au moins un autre segment d'élément de montage (8b).

6. Dispositif selon l'une quelconque des revendications précédentes, **caractérisé en ce que** la première et/ou la deuxième section de support (5, 7) est pourvue d'une structuration de surface, notamment tridimensionnelle, qui augmente la force de maintien du dispositif de support (4) dans l'ouvrage de type puits (2).

7. Dispositif selon l'une quelconque des revendications précédentes, **caractérisé par** au moins un dispositif de serrage (17) rattaché au deuxième élément de fixation (8), qui est équipé pour produire une force de serrage s'opposant au deuxième élément de fixation (8) dans la première position d'exploitation contre une structure ressemblant à un puits (2).

8. Dispositif selon l'une quelconque des revendications précédentes, **caractérisé en ce que** le premier et/ou le deuxième élément de fixation (6, 8) sont formés en forme de barre ou d'ascendant.

9. Dispositif selon l'une quelconque des revendications précédentes, **caractérisé par** un dispositif d'enregistrement (26) conçu pour enregistrer la première et/ou la deuxième position de fonctionnement du deuxième élément de fixation (8) et pour produire une information d'enregistrement descriptive de la première et/ou de la deuxième position de fonctionnement du deuxième élément de fixation (8).

10. Procédé d'insertion d'un dispositif (1) selon l'une quelconque des revendications 1 à 9 dans un ouvrage ressemblant à un puits (2), comprenant les étapes suivantes:
- insertion du dispositif de fixation (4) dans un ouvrage d'art en forme d'évier (2) par l'intermédiaire du dispositif de fixation (19), le deuxième élément du dispositif de fixation (8) du dispositif de fixation (4) étant déplacé vers la deuxième position de fonctionnement,
- Transfert du deuxième élément de fixation (8) de la deuxième position de service à la première position de service par l'intermédiaire du dispositif de réglage (19) avec formation d'un support du dispositif de fixation (4) dans l'ouvrage en forme de puits (2).

11. Procédé d'application d'un dispositif (1) selon l'une quelconque des revendications 1 à 9 à partir d'un ouvrage ressemblant à un puits (2), comprenant les étapes suivantes:
- transfert du deuxième élément de fixation (8) de la première position de service à la deuxième position de service par l'intermédiaire du dispositif de réglage (19) avec dissolution d'un support du dispositif de fixation (4) dans l'ouvrage en forme d'évier (2),
- application du dispositif de fixation (4) à partir de l'ouvrage en forme de puits (2) par le moyen du dispositif de fixation (19), le deuxième élément du dispositif de fixation (8) du dispositif de fixation (4) étant déplacé vers la deuxième position de fonctionnement.
